# EUROPEAN PATENT APPLICATION

(11) **EP 4 472 146 A1**
(43) Date of publication of application: **04.12.2024**
(21) Application number: 22940384.5
(22) Date of filing: 02.11.2022
(51) Int. Cl.: H04L 12/40, H04L 41/122, H04L 45/00, H04L 69/08, H04L 67/51

(54) **NETWORK IN VEHICLE AND CONTROL METHOD THEREFOR**

(30) Priority: 28.04.2022 KR 20220052481
(71) Applicant: LG Electronics Inc., Yeongdeungpo-gu Seoul 07336 (KR)
(72) Inventor: HONG, Hyuntaek, Seoul 06772 (KR); KIM, Haksung, Seoul 06772 (KR); LEE, Sanghun, Seoul 06772 (KR)
(74) Representative: Vossius & Partner Patentanwälte Rechtsanwälte mbB
(86) International application number: PCT/KR2022/016954
(87) International publication number: WO 2023/210890

(57) **Abstract**

The present disclosure is proposed to solve above-described problems and various problems associated thereto, and may provide a control method for a network in a vehicle, comprising the steps wherein: a first node in the vehicle receives a first controller area network (CAN) signal from a first sensor of the first node through CAN communication; the first node converts the first CAN signal into a first Ethernet signal including different pieces of priory information according to vehicle states; and the first node transmits the first Ethernet signal to a second node in the vehicle through Ethernet communication.

## Description

### TECHNICAL FIELD

The present disclosure relates to an in-vehicle network for transmitting heterogeneous protocol messages in a vehicle and control method therefor.

### BACKGROUND

For safety and convenience of a user who uses a vehicle, various sensors and devices are disposed at the vehicle, and functions of the vehicle are diversified. The functions of the vehicle may be divided into a convenience function for promoting driver's convenience, and a safety function for enhancing safety of the driver and/or pedestrians.

The convenience function of the vehicle has a development motive associated with the driver's convenience, such as providing infotainment (information + entertainment) to the vehicle, supporting a partially autonomous driving function, or helping the driver ensuring a field of vision at night or at a blind spot. For example, the convenience functions may include various functions, such as an active cruise control (ACC), a smart parking assist system (SPAS), a night vision (NV), a head up display (HUD), an around view monitor (AVM), an adaptive headlight system (AHS), and the like.

The safety function of the vehicle is a technique of ensuring safeties of the driver and/or pedestrians, and may include various functions, such as a lane departure warning system (LDWS), a lane keeping assist system (LKAS), an autonomous emergency braking (AEB), and the like.

Recently, Ethernet network systems are being applied to vehicles with the evolution of the vehicle electrical/electronic (E/E) architecture. However, since legacy network systems such as a controller area network (CAN) system are still widely used in vehicles, it is necessary for the Ethernet network system to coexist with the legacy network system. In other words, there may be a need for conversion between CAN signals and Ethernet signals within vehicles.

In in-vehicle Ethernet network systems, a CAN signal may be generated and then converted to an Ethernet signal for transmission. Alternatively, an Ethernet signal may be generated at the beginning and then transmitted.

In the CAN system, CAN signals may be communicated with low latency due to the static network configurations and characteristics of CAN communication. However, in the Ethernet network system, Ethernet signals, which are related to safety, may experience high latency due to the characteristics of Ethernet communication which may potentially cause safety issues for vehicle operation.

### DISCLOSURE

### TECHNICAL PROBLEM

The present disclosure is proposed to address the aforementioned issues and various related problems. The present disclosure aims to provide an in-vehicle network and control method therefor to eliminate latency in transmission of safety-related Ethernet signals in in-vehicle Ethernet network systems.

### TECHNICAL SOLUTION

In an aspect of the present disclosure, provided herein is a method of controlling an in-vehicle network. The method may include: receiving, by a first node in a vehicle, a first controller area network (CAN) signal from a first sensor of the first node through CAN communication; converting, by the first node, the first CAN signal into a first Ethernet signal with priority information varying depending on a vehicle status; and transmitting, by the first node, the converted first Ethernet signal to a second node in the vehicle through Ethernet communication.

The priority information may include a priority code point (PCP) value.

The first node may store a PCP table having PCP values respectively corresponding to: a first vehicle status and a first CAN identifier (ID) range; the first vehicle status and a second CAN ID range; a second vehicle status and the first CAN ID range; and the second vehicle status and the second CAN ID range.

The control method may further include receiving, by the first node, the vehicle status from a network manager of a third node in the vehicle.

The control method may further include: receiving, by the network manager, data for vehicle status determination from at least one node in the vehicle; and determining, by the network manager, the vehicle status based on the data for vehicle status determination.

The data for vehicle status determination may include information on at least one of driving speed, weather, time, or driving road conditions.

The control method may further include transmitting, by the network manager, the determined vehicle status to all nodes in the vehicle.

The control method may include: retrieving, by the first node, a PCP value for the first CAN signal from the PCP table based on whether the received vehicle status corresponds to the first vehicle status or the second vehicle status and based on whether a CAN ID of the first CAN signal belongs to the first CAN ID range or the second CAN ID range; and converting, by the first node, the first CAN signal into the first Ethernet signal with the retrieved PCP value.

The first node may store a PCP table having PCP values respectively corresponding to: a first vehicle status and a first CAN signal transmission period range; the first vehicle status and a second CAN signal transmission period range; a second vehicle status and the first CAN signal transmission period range; and the second vehicle status and the second CAN signal transmission period range.

The control method may include: retrieving, by the first node, a PCP value for the first CAN signal from the PCP table based on whether the received vehicle status corresponds to the first vehicle status or the second vehicle status and based on whether a transmission period of the first CAN signal belongs to the first CAN signal transmission period range or the second CAN signal transmission period range; and converting, by the first node, the first CAN signal into the first Ethernet signal with the retrieved PCP value.

The first node may be configured to: transmit the first Ethernet signal with a first PCP value to the second node through a first-class queue; and transmit the first Ethernet signal with a second PCP value to the second node through a second-class queue.

A transmission bandwidth of the first-class queue may be wider than a transmission bandwidth of the second-class queue.

The control method may include transmitting, by a fourth node, an emergency Ethernet signal to other nodes through the first-class queue.

The fourth node may include a second sensor based on Ethernet configured to sense data necessary for safe operation of the vehicle, and the second sensor may be configured to generate the data necessary for the safe operation of the vehicle as the emergency Ethernet signal.

The emergency Ethernet signal may include a first emergency Ethernet signal and a second emergency Ethernet signal. The fourth node may be configured to: transmit the first emergency Ethernet signal to the other nodes through the first-class queue; and transmit the second emergency Ethernet signal to the other nodes through the second-class queue.

Each of the first to fourth node may be an electronic control unit (ECU) in the vehicle.

The first node may include: a CAN transceiver configured to transmit and receive the first CAN signal to and from the first sensor; a controller area network to Ethernet (CAN2ETH) converter configured to convert the first CAN signal to the first Ethernet signal; an Ethernet transceiver configured to transmit the first Ethernet signal to the second node; and a PCP database (DB) storing the PCP table.

The Ethernet transceiver may be configured to receive the determined vehicle status from the network manager as an Ethernet signal.

The control method may further include: determining whether a bandwidth required for transmission of the first Ethernet signal is capable of being secured on a transmission path between the first node and the second node based on the priority information on the first Ethernet signal; and based on that the bandwidth is capable of being secured, controlling the first Ethernet signal to be transmitted to the second node along the transmission path.

The control method may further include, based on that the bandwidth is incapable of being secured, changing the transmission path to route through a third node and controlling the first Ethernet signal to be transmitted to the second node along the changed transmission path.

In another aspect of the present disclosure, provided herein is an in-vehicle network. The network may include: a first node; and a second node. The first node may be configured to: receive a first CAN signal from a first sensor of the first node through CAN communication; convert the first CAN signal into a first Ethernet signal with priority information varying depending on a vehicle status; and transmit the converted first Ethernet signal to a second node through Ethernet communication.

### ADVANTAGEOUS EFFECTS

An in-vehicle network and control method thereof according to the present disclosure have the following effects.

According to at least one aspect of the present disclosure, in an in-vehicle Ethernet network system, latency in transmission of safety-related Ethernet signals may be resolved, thereby further promoting safe vehicle operation.

### BRIEF DESCRIPTION OF THE DRAWINGS

FIGS. 1 and 2 illustrate the exterior of a vehicle according to an embodiment of the present disclosure.
FIGS. 3 and 4 illustrate the interior of a vehicle according to an embodiment of the present disclosure.
FIG. 5 is a block diagram referenced to describe a vehicle related to an embodiment of the present disclosure.
FIG. 6 is a block diagram of a hybrid network system for communication among a plurality of nodes in a vehicle according to the present disclosure.
FIG. 7 illustrates the frame structures of controller area network (CAN) and Ethernet signals available in an embodiment of the present disclosure.
FIG. 8 illustrates an exemplary priority code point (PCP) table according to an embodiment of the present disclosure.
FIG. 9 is a block diagram of a hybrid network system for communication among a plurality of nodes in a vehicle according to the present disclosure.
FIG. 10 is a flowchart illustrating that a CAN signal is converted into an Ethernet signal according to the PCP table of FIG. 8 and then transmitted between nodes.
FIG. 11 is an exemplary PCP table according to an embodiment of the present disclosure.
FIGS. 12 and 13 are block diagrams of a hybrid network system for communication among a plurality of nodes in a vehicle according to the present disclosure.
FIG. 14 is a flowchart illustrating that a CAN signal is converted into an Ethernet signal according to the PCP table of FIG. 11 and then transmitted between nodes.
FIG. 15 is another flowchart illustrating that a CAN signal is converted into an Ethernet signal according to the PCP table in FIG. 11 and then transmitted between nodes.
FIGS. 16 and 17 are flowcharts illustrating determination of the current status of a vehicle according to an embodiment of the present disclosure.
FIG. 18 illustrates an exemplary PCP table according to an embodiment of the present disclosure.
FIG. 19 is a flowchart illustrating determination of the current status of a vehicle according to an embodiment of the present disclosure.
FIGS. 20 and 21 illustrate exemplary PCP tables according to an embodiment of the present disclosure.
FIG. 22 is a block diagram of a hybrid network system for communication among a plurality of nodes in a vehicle according to the present disclosure.
FIG. 23 illustrates the packet structure of a control request message for securing the transmission path for an Ethernet signal according to an embodiment of the disclosure.
FIGS. 24 and 25 illustrate examples in which the transmission path for an Ethernet signal is changed according to the control request message of FIG. 23.

### DETAILED DESCRIPTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents, and substitutes in addition to those which are particularly set out in the accompanying drawings.

Each of these elements may be configured as a separate individual hardware module or implemented as two or more hardware modules. Two or more elements may be implemented as a single hardware module. In some cases, at least one of these elements may be implemented as software.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions, or steps, disclosed in the specification, and it is also understood that greater or fewer components, functions, or steps may likewise be utilized.

Hereinafter, the embodiments of the present disclosure will be described in detail with reference to the accompanying drawings and the content described in the accompanying drawings. However, the present disclosure is not limited or restricted by the embodiments.

The terms used in this specification are selected from widely used general terms in consideration of the functions in the present disclosure. However, the terms may vary according to the intention or practice of those skilled in the art or the emergence of new technologies. In specific cases, terms arbitrarily selected by the applicant are also used, and in such cases, the meaning will be described in the corresponding part of the disclosure. Therefore, it should be noted that the terms used in this specification should be interpreted based on the substantial meanings the terms have and the overall content of this specification, rather than the simple names of the terms.

The vehicle described in the present disclosure may encompass concepts including automobiles and motorcycles. Hereinafter, the description will primarily focus on automobiles.

The vehicle described in the present disclosure may encompass various types of vehicles including an internal combustion engine vehicle with an engine as the power source, a hybrid vehicle with both an engine and an electric motor as the power source, and an electric vehicle with an electric motor as the power source.

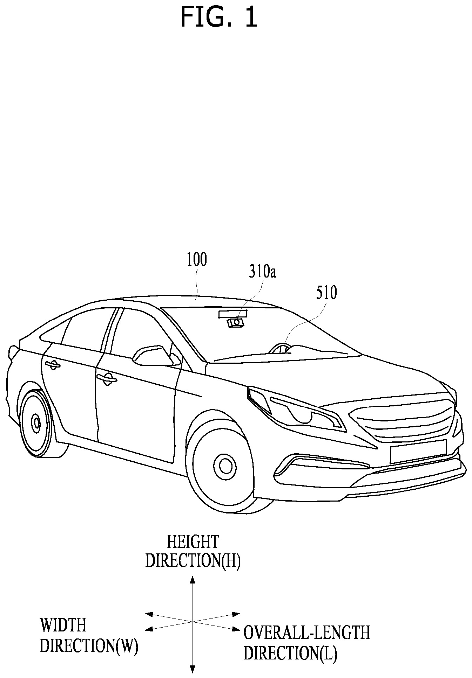

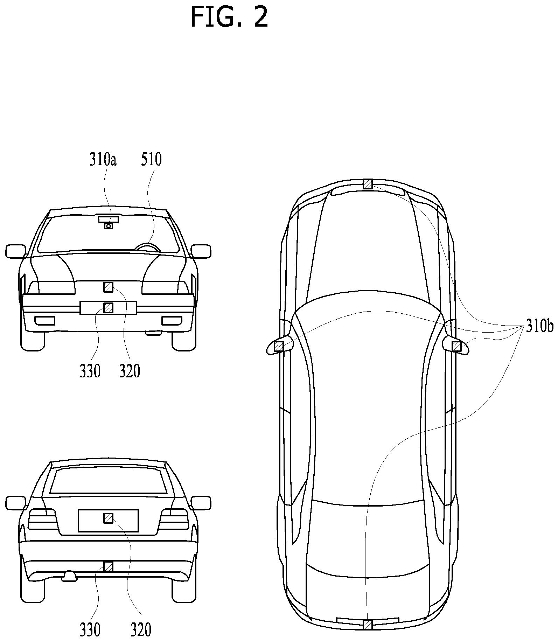

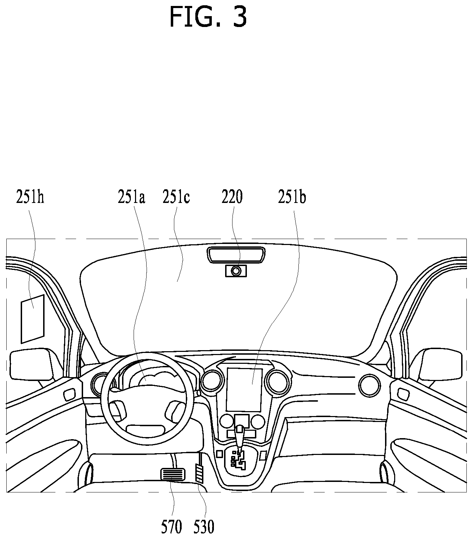

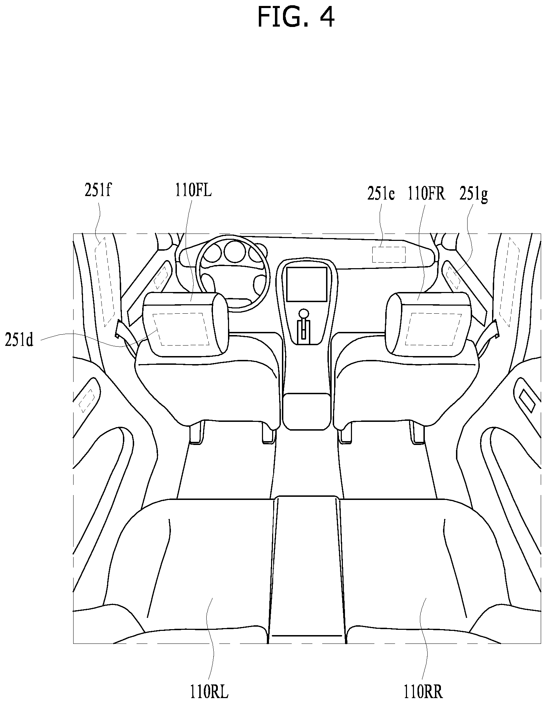

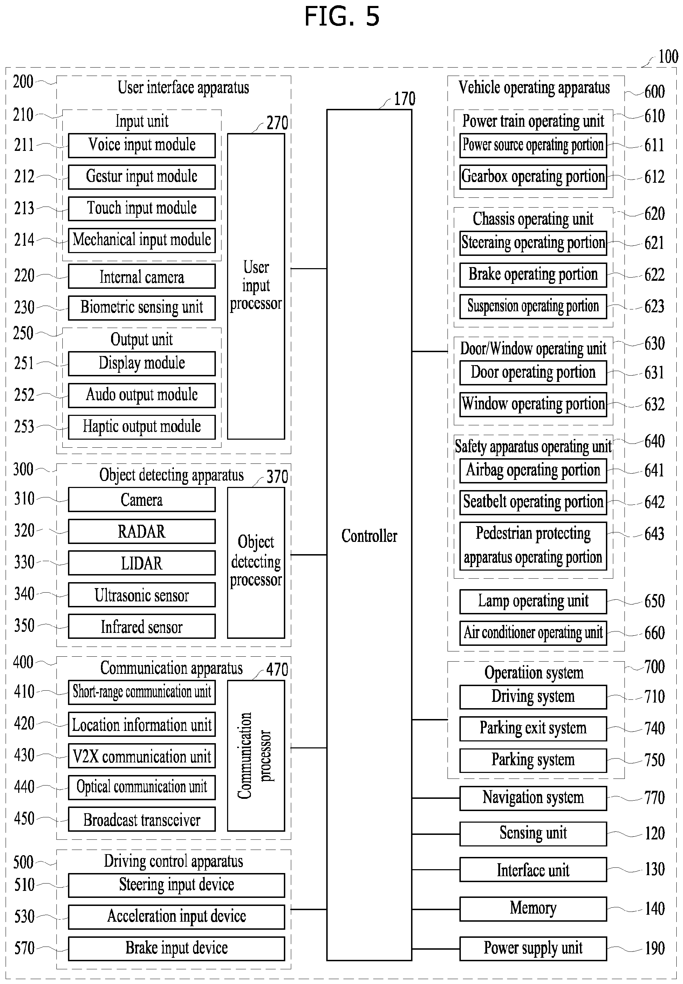

FIGS. 1 and 2 illustrate the exterior of a vehicle according to an implementation and FIGS. 3 and 4 illustrate the interior of the vehicle. FIG. 5 is a block diagram illustrating the vehicle in accordance with the implementation.

As illustrated in FIGS. 1 to 5 , a vehicle 100 may include wheels turning by a driving force, and a steering input device 510 for adjusting a driving (traveling, ongoing, moving) direction of the vehicle 100.

The vehicle 100 may be an autonomous vehicle. The vehicle 100 may be switched into an autonomous mode or a manual mode based on a user input. For example, the vehicle may be switched from the manual mode into the autonomous mode or from the autonomous mode into the manual mode based on a user input received through a user interface apparatus 200.

The vehicle 100 may be switched into the autonomous mode or the manual mode based on driving environment information. The driving environment information may be generated based on object information provided from an object detecting apparatus 300. For example, the vehicle 100 may be switched from the manual mode into the autonomous mode or from the autonomous module into the manual mode based on driving environment information generated in the object detecting apparatus 300. In an example, the vehicle 100 may be switched from the manual mode into the autonomous mode or from the autonomous module into the manual mode based on driving environment information received through a communication apparatus 400.

The vehicle 100 may be switched from the manual mode into the autonomous mode or from the autonomous module into the manual mode based on information, data or signal provided from an external device.

When the vehicle 100 is driven in the autonomous mode, the autonomous vehicle 100 may be driven based on an operation system 700. For example, the autonomous vehicle 100 may be driven based on information, data or signal generated in a driving system 710, a parking exit system 740, or a parking system 750.

When the vehicle 100 is driven in the manual mode, the autonomous vehicle 100 may receive a user input for driving through a driving control apparatus 500. The vehicle 100 may be driven based on the user input received through the driving control apparatus 500.

An overall length refers to a length from a front end to a rear end of the vehicle 100, a width refers to a width from the left side to the right side of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100

As illustrated in FIG. 5, the vehicle 100 may include a user interface apparatus 200, an object detecting apparatus 300, a communication apparatus 400, a driving control apparatus 500, a vehicle operating apparatus 600, an operation system 700, a navigation system 770, a sensing unit 120, an interface unit 130, a memory 140, a controller 170 and a power supply unit 190.

In some implementations, the vehicle 100 may include more components in addition to components to be explained in this specification or may not include some of those components to be explained in this specification.

The user interface apparatus 200 is an apparatus for communication between the vehicle 100 and a user. The user interface apparatus 200 may receive a user input and provide information generated in the vehicle 100 to the user. The vehicle 100 may implement user interfaces (UIs) or user experiences (UXs) through the user interface apparatus 200.

The user interface apparatus 200 may include an input unit 210, an internal camera 220, a biometric sensing unit 230, an output unit 250 and a user interface processor 270. In some implementations, the user interface apparatus 200 may include more components in addition to components to be explained in this specification or may not include some of those components to be explained in this specification.

The input unit 210 may allow the user to input information. Data collected in the input unit 210 may be analyzed by the user interface processor 270 and processed as a user's control command.

The input unit 210 may be disposed inside the vehicle. For example, the input unit 210 may be disposed on one area of a steering wheel, one area of an instrument panel, one area of a seat, one area of each pillar, one area of a door, one area of a center console, one area of a headlining, one area of a sun visor, one area of a wind shield, one area of a window or the like.

The input unit 210 may include a voice input module 211, a gesture input module 212, a touch input module 213, and a mechanical input module 214.

The audio input module 211 may convert a user's voice input into an electric signal. The converted electric signal may be provided to the user interface processor 270 or the controller 170. The voice input module 211 may include at least one microphone.

The gesture input module 212 may convert a user's gesture input into an electric signal. The converted electric signal may be provided to the user interface processor 270 or the controller 170.

The gesture input module 212 may include at least one of an infrared sensor and an image sensor for detecting the user's gesture input. According to embodiments, the gesture input module 212 may detect a user's three-dimensional (3D) gesture input. To this end, the gesture input module 212 may include a light emitting diode outputting a plurality of infrared rays or a plurality of image sensors.

The gesture input module 212 may detect the user's 3D gesture input by a time of flight (TOF) method, a structured light method, or a disparity method.

The touch input module 213 may convert the user's touch input into an electric signal. The converted electric signal may be provided to the user interface processor 270 or the controller 170.

The touch input module 213 may include a touch sensor for detecting the user's touch input. According to an embodiment, the touch input module 213 may be integrated with the display module 251 so as to implement a touch screen. The touch screen may provide an input interface and an output interface between the vehicle 100 and the user.

The mechanical input module 214 may include at least one of a button, a dome switch, a jog wheel, and a jog switch. An electric signal generated by the mechanical input module 214 may be provided to the user interface processor 270 or the controller 170. The mechanical input module 214 may be arranged on a steering wheel, a center fascia, a center console, a cockpit module, a door, and the like.

The internal camera 220 may acquire an internal image of the vehicle. The user interface processor 270 may detect a user's state based on the internal image of the vehicle. The user interface processor 270 may acquire information related to the user's gaze from the internal image of the vehicle. The user interface processor 270 may detect a user gesture from the internal image of the vehicle.

The biometric sensing unit 230 may acquire the user's biometric information. The biometric sensing module 230 may include a sensor for detecting the user's biometric information and acquire fingerprint information and heart rate information regarding the user using the sensor. The biometric information may be used for user authentication.

The output unit 250 may generate an output related to a visual, audible, or tactile signal. The output unit 250 may include at least one of a display module 251, an audio output module 252 and a haptic output module 253.

The display module 251 may output graphic objects corresponding to various types of information. The display module 251 may include at least one of a liquid crystal display (LCD), a thin film transistor-LCD (TFT LCD), an organic light-emitting diode (OLED), a flexible display, a three-dimensional (3D) display and an e-ink display.

The display module 251 may be inter-layered or integrated with a touch input module 213 to implement a touch screen.

The display module 251 may be implemented as a head up display (HUD). When the display module 251 is implemented as the HUD, the display module 251 may be provided with a projecting module so as to output information through an image which is projected on a windshield or a window.

The display module 251 may include a transparent display. The transparent display may be attached to the windshield or the window. The transparent display may have a predetermined degree of transparency and output a predetermined screen thereon. The transparent display may include at least one of a thin film electroluminescent (TFEL), a transparent

OLED, a transparent LCD, a transmissive transparent display, and a transparent LED display. The transparent display may have adjustable transparency.

Meanwhile, the user interface apparatus 200 may include a plurality of display modules 251a to 251g. The display module 251 may be disposed on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The audio output module 252 may convert an electric signal provided from the user interface processor 270 or the controller 170 into an audio signal for output. To this end, the audio output module 252 may include at least one speaker.

The haptic output module 253 generates a tactile output. For example, the haptic output module 253 may vibrate the steering wheel, a safety belt, a seat 110FL, 110FR, 110RL, 110RR such that the user can recognize such output.

The user interface processor 270 may control an overall operation of each unit of the user interface apparatus 200. In some implementations, the user interface apparatus 200 may include a plurality of processors 270 or may not include any user interface processor 270.

When the user interface processor 270 is not included in the user interface apparatus 200, the user interface apparatus 200 may operate according to a control of a processor of another apparatus within the vehicle 100 or the controller 170.

Meanwhile, the user interface apparatus 200 may be called as a display apparatus for vehicle. The user interface apparatus 200 may operate according to the control of the controller 170.

The object detecting apparatus 300 is an apparatus for detecting an object located at outside of the vehicle 100. The object may be a variety of objects associated with driving (operation) of the vehicle 100. An object may include a traffic lane, another vehicle, a pedestrian, a two-wheeled vehicle, traffic signals, light, a road, a structure, a speed hump, a terrain, an animal, and the like.

Objects may be classified into a moving object and a fixed object. For example, the moving object may be a concept including another vehicle and a pedestrian.

The object detecting apparatus 300 may include a camera 310, a radar 320, a LiDAR 330, an ultrasonic sensor 340, an infrared sensor 350, and an object detection processor 370.

In some implementations, the object detecting apparatus 300 may further include other components in addition to the components described, or may not include some of the components described.

The camera 310 may be located on an appropriate portion outside the vehicle to acquire an external image of the vehicle. The camera 310 may be a mono camera, a stereo camera 310 a, an around view monitoring (AVM) camera 310 b or a 360-degree camera.

For example, the camera 310 may be disposed adjacent to a front windshield within the vehicle to acquire a front image of the vehicle. Or, the camera 310 may be disposed adjacent to a front bumper or a radiator grill.

For example, the camera 310 may be disposed adjacent to a rear glass within the vehicle to acquire a rear image of the vehicle. Or, the camera 310 may be disposed adjacent to a rear bumper, a trunk, or a tail gate.

For example, the camera 310 may be disposed adjacent to at least one of side windows within the vehicle to acquire a side image of the vehicle. Or, the camera 310 may be disposed adjacent to a side mirror, a fender, or a door.

The camera 310 may provide an acquired image to the object detection processor 370.

The radar 320 may include electric wave transmitting and receiving portions. The radar 320 may be implemented as a pulse radar or a continuous wave radar according to a principle of emitting electric waves. The radar 320 may be implemented in a frequency modulated continuous wave (FMCW) manner or a frequency shift keying (FSK) manner according to a signal waveform, among the continuous wave radar methods.

The radar 320 may detect an object in a time of flight (TOF) manner or a phase-shift manner through the medium of the electric wave, and detect a position of the detected object, a distance from the detected object and a relative speed with the detected object.

The radar 320 may be disposed on an appropriate position outside the vehicle for detecting an object which is located at a front, rear or side of the vehicle.

The LiDAR 330 may include laser transmitting and receiving portions. The LiDAR 330 may be implemented in a time of flight (TOF) manner or a phase-shift manner.

The LiDAR 330 may be implemented as a drive type or a non-drive type.

For the drive type, the LiDAR 330 may be rotated by a motor and detect object near the vehicle 100.

For the non-drive type, the LiDAR 330 may detect, through light steering, objects which are located within a predetermined range based on the vehicle 100. The vehicle 100 may include a plurality of non-drive type LiDARs 330.

The LiDAR 330 may detect an object in a TOP manner or a phase-shift manner through the medium of a laser beam, and detect a position of the detected object, a distance from the detected object and a relative speed with the detected object.

The LiDAR 330 may be disposed on an appropriate position outside the vehicle for detecting an object located at the front, rear or side of the vehicle.

The ultrasonic sensor 340 may include ultrasonic wave transmitting and receiving portions. The ultrasonic sensor 340 may detect an object based on an ultrasonic wave, and detect a position of the detected object, a distance from the detected object and a relative speed with the detected object.

The ultrasonic sensor 340 may be disposed on an appropriate position outside the vehicle for detecting an object located at the front, rear or side of the vehicle.

The infrared sensor 350 may include infrared light transmitting and receiving portions. The infrared sensor 340 may detect an object based on infrared light, and detect a position of the detected object, a distance from the detected object and a relative speed with the detected obj ect.

The infrared sensor 350 may be disposed on an appropriate position outside the vehicle for detecting an object located at the front, rear or side of the vehicle.

The object detection processor 370 may control an overall operation of each unit of the object detecting apparatus 300.

The object detection processor 370 may detect an object based on an acquired image, and track the object. The object detection processor 370 may execute operations, such as a calculation of a distance from the object, a calculation of a relative speed with the object and the like, through an image processing algorithm.

The object detection processor 370 may detect an object based on a reflected electromagnetic wave which an emitted electromagnetic wave is reflected from the object, and track the object. The object detection processor 370 may execute operations, such as a calculation of a distance from the object, a calculation of a relative speed with the object and the like, based on the electromagnetic wave.

The object detection processor 370 may detect an object based on a reflected laser beam which an emitted laser beam is reflected from the object, and track the object. The object detection processor 370 may execute operations, such as a calculation of a distance from the object, a calculation of a relative speed with the object and the like, based on the laser beam.

The object detection processor 370 may detect an object based on a reflected ultrasonic wave which an emitted ultrasonic wave is reflected from the object, and track the object. The object detection processor 370 may execute operations, such as a calculation of a distance from the object, a calculation of a relative speed with the object and the like, based on the ultrasonic wave.

The object detection processor 370 may detect an object based on reflected infrared light which emitted infrared light is reflected from the object, and track the object. The object detection processor 370 may execute operations, such as a calculation of a distance from the object, a calculation of a relative speed with the object and the like, based on the infrared light.

In some implementations, the object detecting apparatus 300 may include a plurality of object detection processors 370 or may not include any object detection processor 370. For example, each of the camera 310, the radar 320, the LiDAR 330, the ultrasonic sensor 340 and the infrared sensor 350 may each include a corresponding processor in an individual manner.

When the object detection processor 370 is not included in the object detecting apparatus 300, the object detecting apparatus 300 may operate according to the control of a processor of another apparatus within the vehicle 100 or the controller 170.

The object detecting apparatus 400 may operate according to the control of the controller 170.

The communication apparatus 400 is an apparatus for performing communication with an external device. Here, the external device may be another vehicle, a mobile terminal, or a server.

The communication apparatus 400 may perform the communication by including at least one of a transmitting antenna, a receiving antenna, and radio frequency (RF) circuit and RF device for implementing various communication protocols.

The communication apparatus 400 may include a short-range communication unit 410, a location information unit 420, a V2X communication unit 430, an optical communication unit 440, a broadcast transceiver 450 and a communication processor 470.

According to an embodiment, the communication apparatus 400 may further include other components in addition to the components described, or may not include some of the components described.

The short-range communication unit 410 is a unit for facilitating short-range communications. Suitable technologies for implementing such short-range communications include BLUETOOTH, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like.

The short-range communication unit 410 may construct short-range area networks to perform short-range communication between the vehicle 100 and at least one external device.

The location information unit 420 is a unit for acquiring position information. For example, the location information unit 420 may include a Global Positioning System (GPS) module or a Differential Global Positioning System (DGPS) module.

The V2X communication unit 430 is a unit for performing wireless communications with a server (Vehicle to Infra; V2I), another vehicle (Vehicle to Vehicle; V2V), or a pedestrian (Vehicle to Pedestrian; V2P). The V2X communication unit 430 may include an RF circuit implementing a communication protocol with the infra (V2I), a communication protocol between the vehicles (V2V) and a communication protocol with a pedestrian (V2P).

The optical communication unit 440 is a unit for performing communication with an external device through the medium of light. The optical communication unit 440 may include a light-emitting diode for converting an electric signal into an optical signal and sending the optical signal to the exterior, and a photodiode for converting the received optical signal into an electric signal.

According to an embodiment, the light-emitting diode may be integrated with lamps provided on the vehicle 100.

The broadcast transceiver 450 is a unit for receiving a broadcast signal from an external broadcast managing entity or transmitting a broadcast signal to the broadcast managing entity via a broadcast channel. The broadcast channel may include a satellite channel, a terrestrial channel, or both. The broadcast signal may include a TV broadcast signal, a radio broadcast signal, and a data broadcast signal.

The communication processor 470 may control an overall operation of each unit of the communication apparatus 400.

According to an embodiment, the communication apparatus 400 may include a plurality of communication processors 470 or may not include any communication processor 470.

When the communication processor 470 is not included in the communication apparatus 400, the communication apparatus 400 may operate according to the control of a processor of another apparatus within the vehicle 100 or the controller 170.

Meanwhile, the communication apparatus 400 may implement a display apparatus for a vehicle together with the user interface apparatus 200. In this instance, the display apparatus for the vehicle may be referred to as a telematics apparatus or an Audio Video Navigation (AVN) apparatus.

The communication apparatus 400 may operate according to the control of the controller 170.

The driving control apparatus 500 is an apparatus for receiving a user input for driving.

In a manual mode, the vehicle 100 may be operated based on a signal provided by the driving control apparatus 500.

The driving control apparatus 500 may include a steering input device 510, an acceleration input device 530 and a brake input device 570.

The steering input device 510 may receive an input regarding a driving (ongoing) direction of the vehicle 100 from the user. The steering input device 510 may be configured in the form of a wheel allowing a steering input in a rotating manner. In some implementations, the steering input device may also be configured in a shape of a touch screen, a touch pad, or a button.

The acceleration input device 530 may receive an input for accelerating the vehicle 100 from the user. The brake input device 570 may receive an input for braking the vehicle 100 from the user. Each of the acceleration input device 530 and the brake input device 570 is preferably configured in the form of a pedal. In some implementations, the acceleration input device or the brake input device may also be configured in a shape of a touch screen, a touch pad, or a button.

The driving control apparatus 500 may operate according to the control of the controller 170.

The vehicle operating apparatus 600 is an apparatus for electrically controlling operations of various devices within the vehicle 100.

The vehicle operating apparatus 600 may include a power train operating unit 610, a chassis operating unit 620, a door/window operating unit 630, a safety apparatus operating unit 640, a lamp operating unit 650, and an air-conditioner operating unit 660.

According to some embodiments, the vehicle operating apparatus 600 may further include other components in addition to the components described, or may not include some of the components described.

The power train operating unit 610 may control an operation of a power train device.

The power train operating unit 610 may include a power source operating portion 611 and a gearbox operating portion 612.

The power source operating portion 611 may perform a control for a power source of the vehicle 100.

For example, upon using a fossil fuel-based engine as the power source, the power source operating portion 611 may perform an electronic control for the engine. Accordingly, an output torque and the like of the engine can be controlled. The power source operating portion 611 may adjust the engine output torque according to the control of the controller 170.

For example, upon using an electric energy-based motor as the power source, the power source operating portion 611 may perform a control for the motor. The power source operating portion 611 may adjust a rotating speed, a torque, and the like of the motor according to the control of the controller 170.

The gearbox operating portion 612 may perform a control for a gearbox. The gearbox operating portion 612 may adjust a state of the gearbox. The gearbox operating portion 612 may change the state of the gearbox into drive (forward) (D), reverse (R), neutral (N) or parking (P).

In some examples, when an engine is the power source, the gearbox operating portion 612 may adjust a locked state of a gear in the drive (D) state.

The chassis operating unit 620 may control an operation of a chassis device. The chassis operating unit 620 may include a steering operating portion 621, a brake operating portion 622 and a suspension operating portion 623.

The steering operating portion 621 may perform an electronic control for a steering apparatus within the vehicle 100. The steering operating portion 621 may change a driving direction of the vehicle.

The brake operating portion 622 may perform an electronic control for a brake apparatus within the vehicle 100. For example, the brake operating portion 622 may control an operation of brakes provided at wheels to reduce speed of the vehicle 100.

Meanwhile, the brake operating portion 622 may individually control each of a plurality of brakes. The brake operating portion 622 may differently control braking force applied to each of a plurality of wheels.

The suspension operating portion 623 may perform an electronic control for a suspension apparatus within the vehicle 100. For example, the suspension operating portion 623 may control the suspension apparatus to reduce vibration of the vehicle 100 when a bump is present on a road. Meanwhile, the suspension operating portion 623 may individually control each of a plurality of suspensions.

The door/window operating unit 630 may perform an electronic control for a door apparatus or a window apparatus within the vehicle 100.

The door/window operating unit 630 may include a door operating portion 631 and a window operating portion 632.

The door operating portion 631 may perform the control for the door apparatus. The door operating portion 631 may control opening or closing of a plurality of doors of the vehicle 100. The door operating portion 631 may control opening or closing of a trunk or a tail gate. The door operating portion 631 may control opening or closing of a sunroof.

The window operating portion 632 may perform the electronic control for the window apparatus. The window operating portion 632 may control opening or closing of a plurality of windows of the vehicle 100.

The safety apparatus operating unit 640 may perform an electronic control for various safety apparatuses within the vehicle 100.

The safety apparatus operating unit 640 may include an airbag operating portion 641, a seatbelt operating portion 642 and a pedestrian protecting apparatus operating portion 643.

The airbag operating portion 641 may perform an electronic control for an airbag apparatus within the vehicle 100. For example, the airbag operating portion 641 may control the airbag to be deployed upon a detection of a risk.

The seatbelt operating portion 642 may perform an electronic control for a seatbelt apparatus within the vehicle 100. For example, the seatbelt operating portion 642 may control passengers to be motionlessly seated in seats 110FL, 110FR, 110RL, 110RR using seatbelts upon a detection of a risk.

The pedestrian protecting apparatus operating portion 643 may perform an electronic control for a hood lift and a pedestrian airbag. For example, the pedestrian protecting apparatus operating portion 643 may control the hood lift and the pedestrian airbag to be open up upon detecting pedestrian collision.

The lamp operating unit 650 may perform an electronic control for various lamp apparatuses within the vehicle 100.

The air-conditioner operating unit 660 may perform an electronic control for an air conditioner within the vehicle 100. For example, the air-conditioner operating unit 660 may control the air conditioner to supply cold air into the vehicle when internal temperature of the vehicle is high.

The vehicle operating apparatus 600 may include a vehicle operating processor. Each unit of the vehicle operating apparatus 600 may individually include a processor.

The vehicle operating apparatus 600 may operate according to the control of the controller 170.

The operation system 700 is a system that controls various driving modes of the vehicle 100. The operation system 700 may operate in an autonomous driving mode.

The operation system 700 may include a driving system 710, a parking exit system 740 and a parking system 750.

According to embodiments, the operation system 700 may further include other components in addition to components to be described, or may not include some of the components to be described.

Meanwhile, the operation system 700 may include an operating processor. Each unit of the operation system 700 may individually include a processor.

In some implementations, the operation system may be implemented by the controller 170 when it is implemented in a software configuration.

In some implementations, the operation system 700 may be implemented by at least one of the user interface apparatus 200, the object detecting apparatus 300, the communication apparatus 400, the vehicle operating apparatus 600 and the controller 170

The driving system 710 may perform driving of the vehicle 100.

The driving system 710 may receive navigation information from a navigation system 770, transmit a control signal to the vehicle operating apparatus 600, and perform driving of the vehicle 100. The driving system 710 may receive object information from the object detecting apparatus 300, transmit a control signal to the vehicle operating apparatus 600 and perform driving of the vehicle 100. The driving system 710 may receive a signal from an external device through the communication apparatus 400, transmit a control signal to the vehicle operating apparatus 600, and perform driving of the vehicle 100.

The parking exit system 740 may perform an exit of the vehicle 100 from a parking lot.

The parking exit system 740 may receive navigation information from the navigation system 770, transmit a control signal to the vehicle operating apparatus 600, and perform the exit of the vehicle 100 from the parking lot. The parking exit system 740 may receive object information from the object detecting apparatus 300, transmit a control signal to the vehicle operating apparatus 600 and perform the exit of the vehicle 100 from the parking lot. The parking exit system 740 may receive a signal from an external device through the communication apparatus 400, transmit a control signal to the vehicle operating apparatus 600, and perform the exit of the vehicle 100 from the parking lot.

The parking system 750 may perform parking of the vehicle 100.

The parking system 750 may receive navigation information from the navigation system 770, transmit a control signal to the vehicle operating apparatus 600, and park the vehicle 100. The parking system 750 may receive object information from the object detecting apparatus 300, transmit a control signal to the vehicle operating apparatus 600 and park the vehicle 100. The parking system 750 may receive a signal from an external device through the communication apparatus 400, transmit a control signal to the vehicle operating apparatus 600, and park the vehicle 100.

The navigation system 770 may provide navigation information. The navigation information may include at least one of map information, information regarding a set destination, path information according to the set destination, information regarding various objects on a path, lane information and current location information of the vehicle.

The navigation system 770 may include a memory and a navigation processor. The memory may store the navigation information. The navigation processor may control an operation of the navigation system 770.

According to embodiments, the navigation system 770 may update prestored information by receiving information from an external device through the communication apparatus 400.

In some implementations, the navigation system 770 may be classified as a sub component of the user interface apparatus 200.

The sensing unit 120 may sense a status of the vehicle. The sensing unit 120 may include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing unit 120 may acquire sensing signals with respect to vehicle-related information, such as a posture, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing unit 120 may further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The interface unit 130 may serve as a path allowing the vehicle 100 to interface with various types of external devices connected thereto. For example, the interface unit 130 may be provided with a port connectable with a mobile terminal, and connected to the mobile terminal through the port. In this instance, the interface unit 130 may exchange data with the mobile terminal.

In some examples, the interface unit 130 may serve as a path for supplying electric energy to the connected mobile terminal. When the mobile terminal is electrically connected to the interface unit 130, the interface unit 130 supplies electric energy supplied from a power supply unit 190 to the mobile terminal according to the control of the controller 170.

The memory 140 is electrically connected to the controller 170. The memory 140 may store basic data for units, control data for controlling operations of units and input/output data. The memory 140 may be a variety of storage devices, such as ROM, RAM, EPROM, a flash drive, a hard drive, and the like in a hardware configuration. The memory 140 may store various data for overall operations of the vehicle 100, such as programs for processing or controlling the controller 170.

In some implementations, the memory 140 may be integrated with the controller 170 or implemented as a sub component of the controller 170.

The controller 170 may control an overall operation of each unit of the vehicle 100. The controller 170 may be referred to as an electronic control unit (ECU).

The power supply unit 190 may supply power required for an operation of each component according to the control of the controller 170. Specifically, the power supply unit 190 may receive power supplied from an internal battery of the vehicle, and the like.

At least one processor and the controller 170 included in the vehicle 100 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and electric units performing other functions.

A plurality of ECUs may be installed to control each component in the vehicle 100. Each ECU may perform a function of processing data perceived by sensors and transmitting commands to actuators.

Traditionally, the plurality of ECUs in the vehicle 100 may communicate with each other through legacy network systems such as a controller area network (CAN) system, without any host computer.

Recently, the vehicle 100 has evolved into a connected car capable of communicating in real-time with other vehicles, traffic and communication infrastructure, and pedestrian terminals via wireless local area networks (WLANs) and/or mobile communications (e.g., LTE, 5G, etc.), aiding driver convenience and traffic safety, and providing a variety of Internet services. From the perspective that the connected car itself becomes a communication device, the vehicle 100 may also be understood as a massive Internet of Things (IoT) device.

As the vehicle electrical/electronic (E/E) architecture evolves to further enhance the development of connected cars, an Ethernet network system is being introduced into the vehicle 100. However, considering that legacy network systems such as the CAN system are still widely used in vehicles, there is a need for the Ethernet network system to coexist with the legacy network systems.

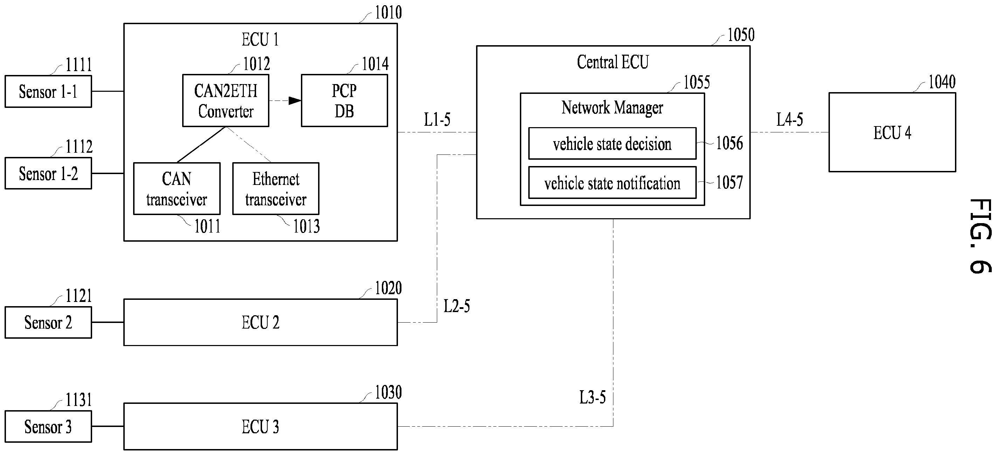

Hereinafter, with reference to FIG. 6, a description will be provided of a hybrid network system where both legacy and next-generation network systems are applicable to the vehicle 100 for communication among a plurality of ECUs. FIG. 6 is a block diagram of a hybrid network system for communication among a plurality of nodes in a vehicle according to the present disclosure.

Hereinafter, it is assumed that the legacy network system is the CAN system and the next-generation network system is the Ethernet network system. However, this is merely an example, and other network systems may be considered as the legacy and next-generation network systems.

The vehicle 100 may include a plurality of ECUs. In FIG. 6, the vehicle 100 is illustrated as including five ECUs: ECU1 1010, ECU2 1020, ECU3 1030, ECU4 1040, and ECU5 1050. However, this is merely an example, and the vehicle 100 may include more ECUs. Each of the plurality of ECUs may be understood as a "node."

The internal configuration of ECU1 1010 will be described as a representative for ECU1 1010, ECU2 1020, ECU3 1030, and ECU4 1040. That is, ECU2 1020, ECU3 1030, and ECU4 1040 may have the same internal configuration as ECU1 1010.

ECU1 1010 may include a CAN transceiver 1011 for transmitting and receiving CAN signals (or data, messages), a controller area network to Ethernet (CAN2ETH) converter 1012 for converting the received CAN signals into Ethernet signals, an Ethernet transceiver 1013 for transmitting the converted Ethernet signals to other nodes and receiving Ethernet signals from other nodes, and a priority code point (PCP) database (DB) (or memory) (1014) that stores a PCP table used when converting the CAN signals into the Ethernet signals. The PCP will be described in detail later.

ECU5 1050, which is the central ECU, may further include a network manager 1055 in addition to the CAN transceiver, CAN2ETH converter, Ethernet transceiver, and PCP DB. The network manager 1055 may include a vehicle status determination module 1056 and a vehicle status notification module 1057. The network manager 1055 may be implemented in hardware or software. The operations of the network manager 1055 will be described in detail later.

Ethernet communication may be performed between ECU1 1010, ECU2 1020, ECU3 1030, ECU4 1040, and ECU5 1050. In FIG. 6, it is illustrated that ECU1 1010 communicates with ECU5 1050 via an L1-5 link, ECU2 1020 communicates with ECU5 1050 via an L2-5 link, ECU3 1030 communicates with ECU5 1050 via an L3-5 link, and ECU4 1040 communicates with ECU5 1050 via an L4-5 link. However, this is merely illustrative, and it is understood that the plurality of ECUs are capable of performing Ethernet communication with each other via different links.

Each ECU 1010, 1020, 1030, 1040, or 1050 may control at least one sensor and/or at least one actuator (e.g., the aforementioned driver).

If the sensor and/or actuator is a CAN-based device, the sensor and/or actuator may communicate with the CAN transceiver of the corresponding ECU. In this case, a CAN sensing signal from the sensor may be transmitted to the CAN transceiver of the corresponding ECU. The transmitted CAN sensing signal may be converted into an Ethernet sensing signal by the CAN2ETH converter of the corresponding ECU and then transmitted to other nodes via the Ethernet transceiver of the corresponding ECU. An Ethernet driving signal from another node may be received through the Ethernet transceiver of the corresponding ECU. The received Ethernet driving signal may be converted into a CAN driving signal by the CAN2ETH converter of the corresponding ECU and then transmitted to the actuator via the CAN transceiver of the corresponding ECU.

If the sensor and/or actuator is an Ethernet-based device, the sensor and/or actuator may communicate with the Ethernet transceiver of the corresponding ECU. In this case, an Ethernet sensing signal from the sensor may be directly transmitted to the Ethernet transceiver of the corresponding ECU and then transmitted to other nodes without passing through the CAN2ETH converter of the corresponding ECU. An Ethernet driving signal from another node may be received through the Ethernet transceiver of the corresponding ECU and then directly transmitted to the actuator without passing through the CAN2ETH converter of the corresponding ECU.

In FIG. 6, it is illustrated that ECU1 1010 controls sensor 1-1 1111 and sensor 1-2 1112, ECU2 1020 controls sensor 2 1121, and ECU3 1030 controls sensor 3 1131. This is merely an example, and each ECU may be configured to control more or fewer sensors and/or actuators.

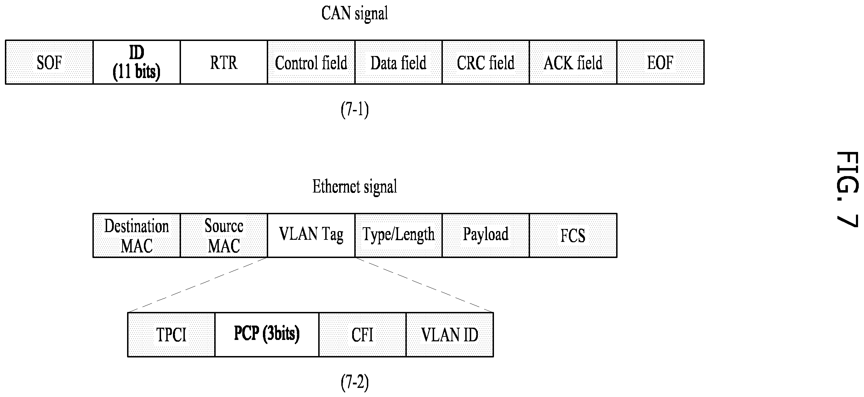

Hereinafter, the data packet structures of CAN and Ethernet signals will be explained with reference to FIG. 7. FIG. 7 illustrates the frame structures of CAN and Ethernet signals available in an embodiment of the present disclosure.

First, the frame structure of the CAN signal will be described with reference to (7-1) of FIG. 7.

The CAN signal may include a start of frame (SOF) field, an Identifier (ID) field, a remote transmission request (RTR) field, a control field, a data field, a cyclic redundancy check (CRC) field, an acknowledge (ACK) field, and an end of frame (EOF) field.

The SOF field may indicate the start of a frame for the CAN signal and include information for the synchronization of all nodes.

The ID field may include information on an 11-bit identifier (ID) of the CAN signal. The CAN ID value of the CAN signal may be set to one of the values from 0 to 2047. The higher the priority of the CAN signal, the smaller the CAN ID value of the CAN signal may be. In other words, a CAN signal with a CAN ID value of 0 has the highest priority, while a CAN signal with a CAN ID value of 2047 has the lowest priority.

The RTR field may include information to distinguish whether the CAN signal is a data frame or a remote frame.

The control field may include a 2-bit identifier extension (IDE) and a 4-bit data length code (DLC).

The data field may include data for transmission from one node to another node.

The ACK field may include information to indicate whether the CAN signal has been received correctly.

The EOF field may include information to indicate the end of a frame for the CAN signal.

With reference to (7-2) of FIG. 7, the frame structure of the Ethernet signal according to the IEEE 802.1Q standard will be described.

The Ethernet signal may include a destination media access control (MAC) address field, a source MAC address field, a virtual local area network (VLAN) tag field, a type/length field, a payload field, and a frame check sequence (FCS) field.

The destination MAC address field may include information on the MAC address of a node that will receive the Ethernet signal.

The source MAC address field may include information on the MAC address of a node transmitting the Ethernet signal.

The VLAN tag field may include information on a VLAN to which the Ethernet signal belongs. The VLAN tag field may further include a tag protocol identifier (TPID) field, a PCP field, a canonical format identifier (CFI) field, and a VLAN identifier (VID) field.

The TPID field may include information to indicate the presence of the VLAN tag field following the source MAC address field.

The PCP field may include 3-bit information on the priority of the Ethernet signal. For example, an Ethernet signal with a priority of PCP3 may be transmitted as a critical application (CA) class, an Ethernet signal with a priority of PCP2 may be transmitted as an excellent effort (EE) class, and an Ethernet signal with a priority of PCP 1 may be transmitted as a best effort (BE) class. In other words, if there are three Ethernet signals with priorities of PCP1, PCP2, and PCP3 respectively, an Ethernet signal with the PCP3 priority may be transmitted at the highest speed, an Ethernet signal with the PCP1 priority may be transmitted at the lowest speed, and an Ethernet signal with the PCP2 priority may be transmitted at an intermediate speed.

The CFI field may include information on whether the Ethernet signal is capable of being dropped in case of congestion in the Ethernet network.

The type/length field may indicate the size of data in the payload field if the value of the type/length field is 1,500 or less. Otherwise, the type/length field may indicate the type of the Ethernet signal.

The payload field may include the payload capable of being carried by the Ethernet signal.

The FCS field may include information for checking errors in transmission and reception of the Ethernet signal.

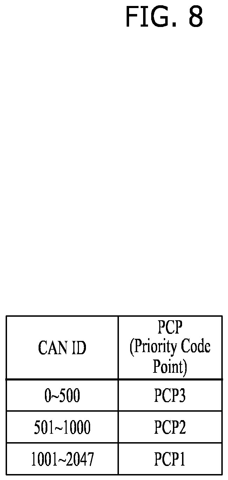

Hereinafter, a PCP table will be described with reference to FIG. 8. FIG. 8 illustrates an exemplary PCP table according to an embodiment of the present disclosure.

FIG. 8 shows that CAN signals with CAN IDs in a first range are mapped to a priority of PCP3 (or a PCP value related thereto), CAN signals with CAN IDs in a second range are mapped to the PCP2 priority (or a PCP value related thereto), and CAN signals with CAN IDs in a third range are mapped to the PCP1 priority (or a PCP value related thereto). In FIG. 8, it is illustrated that the CAN IDs in the first range are 0 to 500, the CAN IDs in the second range are 501 to 1000, and the CAN IDs in the third range are 1001 to 2047. However, the present disclosure is not limited to thereto.

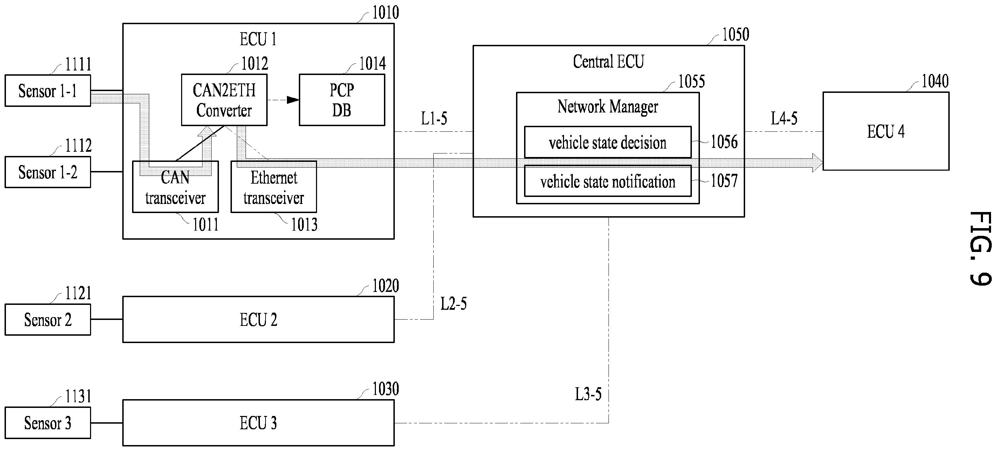

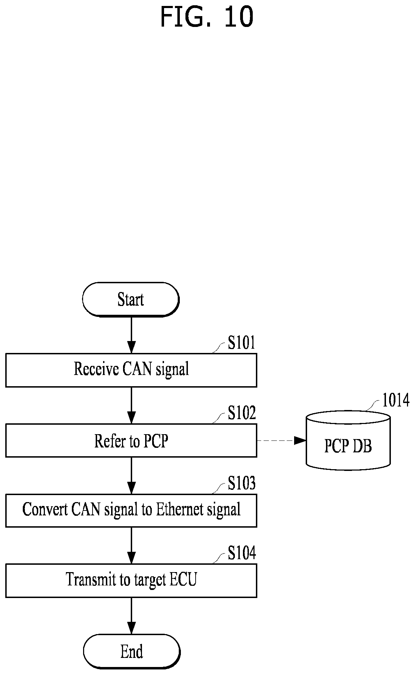

Hereinafter, a process of converting a CAN signal to an Ethernet signal based on the PCP table of FIG. 8 and transmitting the signal between nodes will be described with reference to FIGS. 9 and 10. FIG. 9 is a block diagram of a hybrid network system for communication among a plurality of nodes in a vehicle according to the present disclosure. FIG. 10 is a flowchart illustrating that a CAN signal is converted into an Ethernet signal according to the PCP table of FIG. 8 and then transmitted between nodes.

FIG. 9 illustrates a case where a CAN signal generated by sensor 1-1 1111, which is controlled by ECU1 1010, is converted by ECU1 1010 to an Ethernet signal and transmitted to a target ECU, ECU4 1040.

The CAN transceiver 1011 of ECU1 1010 may receive the CAN signal generated by sensor 1-1 1111 and forward the CAN signal to the CAN2ETH converter 1012 of ECU1 1010 [S101].

The CAN2ETH converter 1012 may extract a CAN ID from the ID field of the CAN signal and retrieve a PCP priority mapped to the extracted CAN ID by referencing a PCP table in the PCP DB 1014 [5102].

The CAN2ETH converter 1012 may convert the CAN signal into an Ethernet signal such that a PCP field is filled with a value corresponding to the retrieved PCP priority and then forward the converted Ethernet signal to the Ethernet transceiver 1013 [S103].

The Ethernet transceiver 1013 may operate a buffer (not shown) that manages three classes of queues: a first-class queue (e.g., stream reservation (SR) A class queue), a second-class queue (e.g., SR-B class queue), and a third-class queue (e.g., BE class queue). The first-class queue is a queue that transmits data through the widest bandwidth among the three classes of queues, the third-class queue is a queue that transmits data through the narrowest bandwidth among the three classes of queues, and the second-class queue is a queue that transmits data through a medium bandwidth among the three classes of queues. The first-class queue and the second-class queue may handle only a specific percentage of the total network bandwidth (e.g., about 75%). The Ethernet transceiver 1013 may assign an Ethernet signal with the PCP3 priority to the first-class queue, an Ethernet signal with the PCP2 priority to the second-class queue, and an Ethernet signal with the PCP1 priority to the third-class queue.

The Ethernet signal may be transmitted to ECU4 1040 through the assigned queue [S104].

Therefore, an Ethernet signal with the PCP3 priority may be transmitted at the highest speed, an Ethernet signal with priority of PCP 1 may be transmitted at the lowest speed, and an Ethernet signal with the PCP2 priority may be transmitted at an intermediate speed.

Sensor 2 1121 of ECU2 1020 is an Ethernet-based device that generates an Ethernet signal (e.g., radar or image signal for detecting objects located in the front, rear, or sides of a vehicle) important for safe driving of the vehicle 100. It is assumed that the generated Ethernet signal needs to be quickly transmitted to ECU4 1040 for the safe driving of the vehicle 100. Hereinafter, Ethernet signals that need to be transmitted quickly for safe driving will be referred to as "emergency Ethernet signals." In this case, ECU2 1020 may assign the emergency Ethernet signal to the first-class queue of ECU2 1020 such that the emergency Ethernet signal has the PCP3 priority to ensure that the emergency Ethernet signal is quickly transmitted to ECU4 1040.

However, if there are many other Ethernet signals with the PCP3 priority (for example, Ethernet signals converted from CAN signals to have the PCP3 priority) waiting to be transmitted in the first-class queue of ECU2 1020, the emergency Ethernet signal needs to wait until these other Ethernet signals are transmitted, which may inevitably cause latency in the transmission.

To resolve this issue, it may be considered to narrow the first range of CAN signals to secure a more bandwidth for the first-class queue. For example, it may be considered to configure a PCP table such that CAN IDs in the first range are 0 to 100, CAN IDs in the second range are 101 to 800, and CAN IDs in the third range are 801 to 2047.

However, in this case, Ethernet signals converted from CAN signals with CAN IDs in the second range (hereinafter referred to as "second-range Ethernet signals") may increase, and all the Ethernet signals need to use the second-class queue. Ethernet signals converted from CAN signals with CAN IDs in the third range (hereinafter referred to as "third-range Ethernet signals") may also increase, and all Ethernet signals need to use the third-class queue. Consequently, latency may occur in the transmission of both second-range and third-range Ethernet signals. The second-range and third-range Ethernet signals may, for example, be related to infotainment data within the vehicle 100. However, when the vehicle 100 is not in motion, if latency occurs during the transmission of such infotainment data, it may cause inconvenience to the user. Therefore, it is necessary for the PCP table to be flexibly managed according to the driving conditions of the vehicle 100.

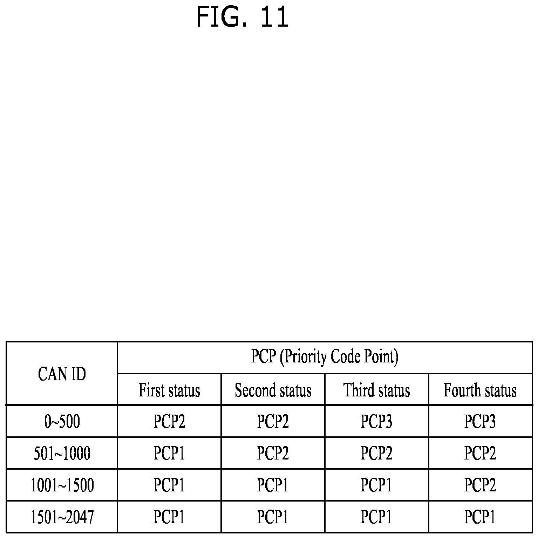

Hereinafter, a PCP table capable of being flexibly managed according to the driving conditions of the vehicle 100 will be described with reference to FIG. 11. FIG. 11 is an exemplary PCP table according to an embodiment of the present disclosure.

In the above, to rapidly transmit the emergency Ethernet signal, it has been explained that the emergency Ethernet signal is assigned to the first-class queue of the corresponding ECU such that the emergency Ethernet signal has the PCP3 priority.

However, the emergency Ethernet signal does not need to have the PCP3 priority, that is, the emergency Ethernet signal does not need to be assigned to the first-class queue of the corresponding ECU. In some cases, the emergency Ethernet signal may be divided into a first emergency Ethernet signal and a second emergency Ethernet signal depending on the importance thereof. The more critical first emergency Ethernet signal may have the PCP3 priority and thus be assigned to the first-class queue of the corresponding ECU, while the less critical second emergency Ethernet signal may have the PCP2 priority and thus be assigned to the second-class queue of the corresponding ECU. In the following, FIG. 11 will be described based on the first and second emergency Ethernet signals.

As shown in FIG. 11, CAN IDs in the first range, CAN IDs in the second range, and CAN IDs in the third range may be assigned different PCP priorities depending on the current status of the vehicle 100.

For example, the current status of the vehicle 100 may be divided into four statuses: a first status, a second status, a third status, and a fourth status. This is merely an example, and the current status of the vehicle 100 may be divided into fewer or more statuses.

The first status is a status in which it is deemed necessary to secure at least 75% of a bandwidth for transmitting emergency Ethernet signals (hereinafter referred to as "emergency Ethernet signal bandwidth"). The second status is a status in which it is deemed necessary to secure between 50% and 75% of the emergency Ethernet signal bandwidth. The third status is a status in which it is deemed necessary to secure between 25% and 50% of the emergency Ethernet signal bandwidth. The fourth status is a status in which it is deemed sufficient to secure less than 25% of the emergency Ethernet signal bandwidth. In other words, the first status is a status in which the safe driving of the vehicle 100 needs to be considered most critically (e.g., high-speed driving in the rain). As the status progresses from the second status to the fourth status, the safe driving of the vehicle 100 becomes less critical (e.g., stationary status). The numerical ranges of the emergency Ethernet signal bandwidth for each status are exemplary. Thus, the numerical ranges may vary.

The status of the vehicle 100 may be determined by the vehicle status determination module 1056 of the network manager 1055 in central ECU5 1050 based on at least one of various factors that may affect the safety of the vehicle 100, such as the current driving speed, current weather, current driving time, and road conditions. The vehicle status determination module 1056 may receive signals related to the various safety-impacting factors from the corresponding ECU.

In FIG. 11, it is illustrated that CAN IDs in the PCP table are divided into four ranges: first, second, third, and fourth ranges. Specifically, FIG. 11 shows that the CAN IDs are divided in a relatively even manner as follows: CAN IDs in the first range are 0 to 500, CAN IDs in the second range are 501 to 1000, CAN IDs in the third range are 1001 to 1500, and CAN IDs in the fourth range are 1501 to 2047. However, the present disclosure is not limited thereto.

In the first status, it is illustrated that there are no CAN signals mapped to the PCP3 priority, CAN signals with the CAN IDs in the first range are mapped to the PCP2 priority, and CAN signals with the CAN IDs in the second to fourth ranges are mapped to the PCP1 priority.

In the second status, it is illustrated that there are no CAN signals mapped to the PCP3 priority, CAN signals with the CAN IDs in the first and second ranges are mapped to the PCP2 priority, and CAN signals with the CAN IDs in the third and fourth ranges are mapped to the PCP1 priority.

In the third status, it is illustrated that CAN signals with the CAN IDs in the first range are mapped to the PCP3 priority, CAN signals with the CAN IDs in the second range are mapped to the PCP2 priority, and CAN signals with the CAN IDs in the third and fourth ranges are mapped to the PCP1 priority.

In the fourth status, it is illustrated that CAN signals with the CAN IDs in the first range are mapped to the PCP3 priority, CAN signals with the CAN IDs in the second and third ranges are mapped to the PCP2 priority, and CAN signals with the CAN IDs in the fourth range are mapped to the PCP1 priority.

In the first and second statuses, since there are no CAN signals mapped to the PCP priority 3, only first emergency Ethernet signals exclusively occupy the first-class queue and may be transmitted the fastest.

In the third and fourth statuses, since CAN signals in the first range are mapped to the PCP priority 3, Ethernet signals converted from the CAN signals in the first range, i.e., Ethernet signals in the first range and first emergency Ethernet signals may share the first-class queue.

In the first status, only the CAN signals in the first range are mapped to the PCP priority 2, whereas in the second status, CAN signals in both the first and second ranges are mapped to the PCP priority 2. Therefore, in the first status, second emergency Ethernet signals share the second-class queue with the Ethernet signals in the first range. However, in the second status, the second emergency Ethernet signals may share the second-class queue with both the Ethernet signals in the first range and Ethernet signals converted from the CAN signals in the second range, i.e., Ethernet signals in the second range.

In the third status, only CAN signals in the second range are mapped to the PCP priority 2, whereas in the fourth status, CAN signals in both the second and third ranges are mapped to the PCP priority 2. Therefore, in the third status, the second emergency Ethernet signals share the second-class queue with the Ethernet signals in the second range. However, in the fourth status, the second emergency Ethernet signals may share the second-class queue with both the Ethernet signals in the second range and Ethernet signals in the third range.

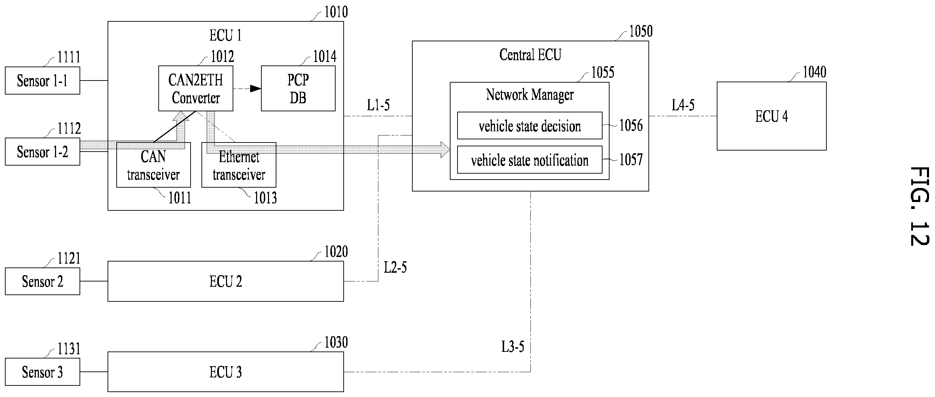

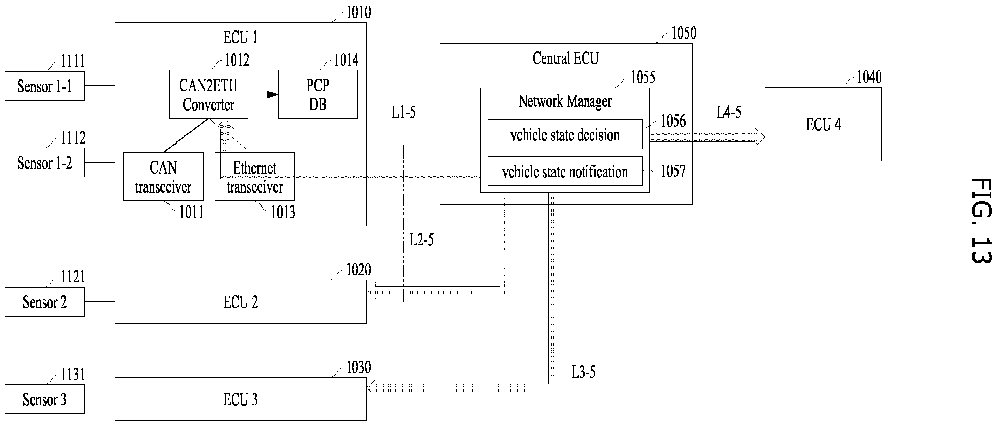

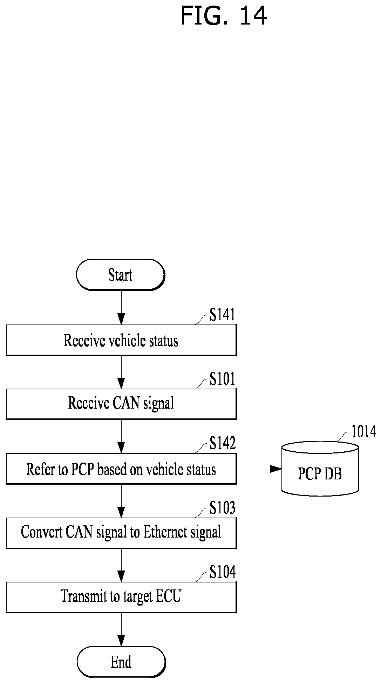

Hereinafter, a process of converting a CAN signal to an Ethernet signal based on the PCP table of FIG. 11 and transmitting the signal between nodes will be described with reference to FIGS. 12 to 14. FIGS. 12 and 13 are block diagrams of a hybrid network system for communication among a plurality of nodes in a vehicle according to the present disclosure. FIG. 14 is a flowchart illustrating that a CAN signal is converted into an Ethernet signal according to the PCP table of FIG. 11 and then transmitted between nodes.

Similarly to FIG. 9, FIGS. 12 to 14 show cases in which a CAN signal generated by sensor 1-1 1111, which is controlled by ECU1 1010, is converted by ECU1 1010 to an Ethernet signal and transmitted to a target ECU, ECU4 1040.

Data related to factors necessary for determining the status of the vehicle 100 (e.g., current speed, current weather, current driving time, road conditions, etc.) may be transmitted to the network manager 1055 of central ECU5 1050 (hereinafter referred to as data for vehicle status determination).

In FIG. 12, it is illustrated that data for vehicle status determination is sensed as a CAN signal by sensor 1-2 1112 of ECU1 1010 and transmitted to the network manager 1055 of central ECU5 1050 via the CAN transceiver 1011, CAN2ETH converter 1012, and Ethernet transceiver 1013 of ECU1 1010. Data for vehicle status determination from other ECUs may also be transmitted to the network manager 1055 of central ECU5 1050. Since conversion of CAN signals to Ethernet signals and transmission thereof between nodes have already been described, detailed explanations will be omitted. A sensor sensing the data for vehicle status determination does not need to be a CAN-based device, and therefore, the data for vehicle status determination does not need to be sensed as a CAN signal. The sensor sensing the data for vehicle status determination may be an Ethernet-based device, and therefore, the data for vehicle status determination may be sensed as an Ethernet signal.

The network manager 1055 may receive the data for vehicle status determination from at least one ECU and determine the current status of the vehicle 100 in real-time through the vehicle status determination module 1056.

The network manager 1055 may notify at least one ECU of the vehicle 100 of the current status of the vehicle 100 through the vehicle status notification module 1057. Preferably, as shown in FIG. 13, the network manager 1055 may notify all ECUs of the vehicle 100 of the current status of the vehicle 100 (e.g., one of the first to fourth statuses described above). The current status of the vehicle 100 may be transmitted as an Ethernet signal to the corresponding CAN2ETH converter of each ECU through the corresponding Ethernet transceiver [S141].

The CAN transceiver 1011 of ECU1 1010 may receive a CAN signal generated by sensor 1-1 1111 and forward the CAN signal to the CAN2ETH converter 1012 of ECU1 1010 [S101].

The CAN2ETH converter 1012 may extract a CAN ID from the ID field of the CAN signal and retrieve a PCP priority mapped to the extracted CAN ID by referencing a PCP table in the PCP DB 1014 based on the received current status of the vehicle 100 [S102].

The CAN2ETH converter 1012 may convert the CAN signal into an Ethernet signal such that a PCP field is filled with a value corresponding to the retrieved PCP priority (hereinafter referred to as a PCP value) and then forward the converted Ethernet signal to the Ethernet transceiver 1013 [S103].

The Ethernet transceiver 1013 may assign an Ethernet signal with a priority of PCP3 to the first-class queue, an Ethernet signal with a priority of PCP2 to the second-class queue, and an Ethernet signal with a priority of PCP 1 to the third-class queue. The Ethernet signal can be transmitted to ECU4 1040 through the assigned queue [S104].

First and second emergency Ethernet signals may be transmitted between nodes through a bandwidth secured by the dynamic operation of the PCP table based on the vehicle status.

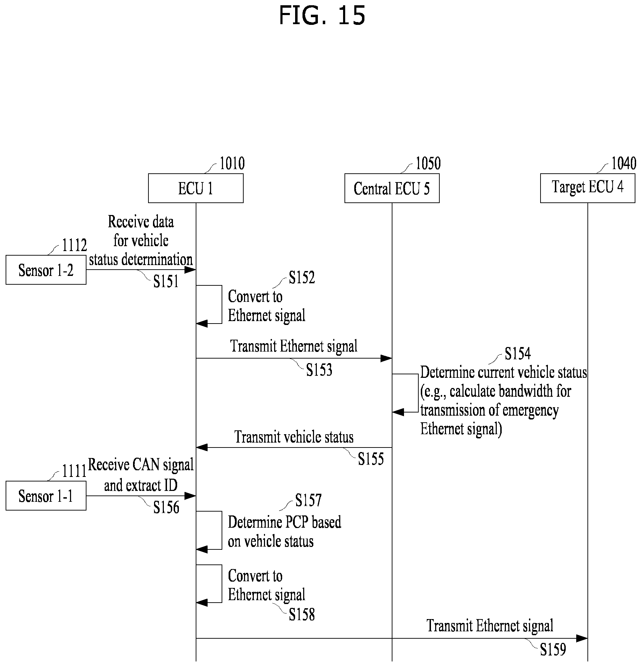

Conversion of CAN signals to Ethernet signals and transmission thereof between nodes according to FIGS. 12 to 14 will be further explained with reference to FIG. 15. FIG. 15 is another flowchart illustrating that a CAN signal is converted into an Ethernet signal according to the PCP table in FIG. 11 and then transmitted between nodes.

ECU1 1010 may receive data for vehicle status determination as a CAN signal from sensor 1-2 1112 [S151].

ECU1 1010 may convert the CAN signal into the Ethernet signal and transmit the signal to the central ECU 1050 [S152 and S153].

The central ECU 1050 may receive the data for vehicle status determination from ECU1 1010 and determine in real-time which of the first to fourth statuses the current status of the vehicle 100 corresponds to [S154]. For example, the central ECU 1050 may determine the current status by calculating a bandwidth required for transmitting emergency Ethernet signals based on the data for vehicle status determination [S154].

The central ECU 1050 may notify all ECUs including ECU1 1010 of the current status of the vehicle 100 [S155].

ECU1 1010 may receive a CAN signal generated by sensor 1-1 1111 and extract a CAN ID from the ID field of the CAN signal [5156].

ECU1 1010 may retrieve a PCP priority mapped to the extracted CAN ID by referencing a PCP table in the PCP DB 1014 based on the current status of the vehicle 100 [S157].

ECU1 1010 may convert the CAN signal into an Ethernet signal such that a PCP field is filled with a value corresponding to the retrieved PCP priority [S158].

ECU1 1010 may assign the converted Ethernet signal to a queue corresponding to the PCP priority and then transmit the Ethernet signal to ECU4 1040 [S159].

First and second emergency Ethernet signals may be transmitted between nodes through a bandwidth secured by the dynamic operation of the PCP table based on the vehicle status.

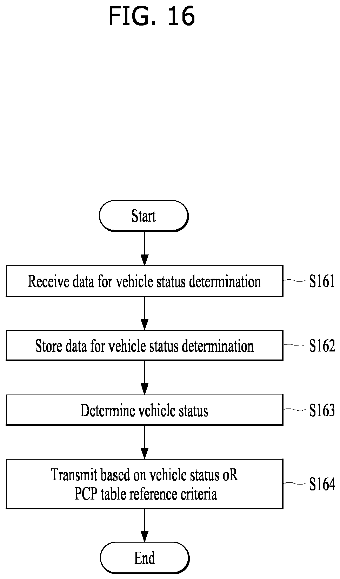

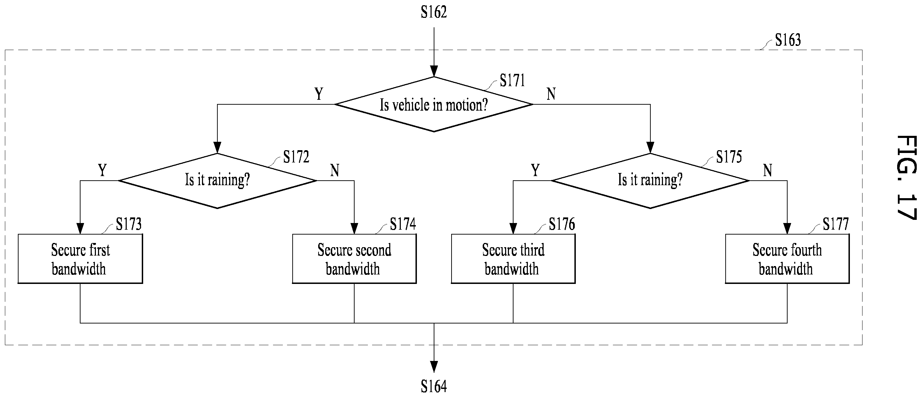

Hereinafter, with reference to FIGS. 16 and 17, an example will be described in which the network manager 1055 of central ECU5 1050 determines the current status of the vehicle 100. FIGS. 16 and 17 are flowcharts illustrating determination of the current status of a vehicle according to an embodiment of the present disclosure.

The network manager 1055 may receive data for vehicle status determination from at least one ECU [S161]. As this has been explained previously, detailed explanations will be omitted.

The network manager 1055 may store the received data for vehicle status determination as a table [S162]. The received data for vehicle status determination may be temporarily stored in a volatile memory or permanently stored in a non-volatile memory. This is for the network manager 1055 to determine the current status of the vehicle by collecting the data for vehicle status determination received from various nodes.

The network manager 1055 may determine the current status of the vehicle based on the received data for vehicle status determination [S 163]. Details thereof will be further explained with reference to FIG. 17.

The network manager 1055 may transmit the determined current status of the vehicle or the reference criteria of the PCP table to each ECU [S164].

Hereinafter, it will be described with further reference to FIG. 17 that the current status of the vehicle is determined based on the data for vehicle status determination and the PCP table in FIG. 11 by assuming that the data for vehicle status determination includes the driving status of the vehicle and the current weather.

The network manager 1055 may determine whether the vehicle 100 is currently driving [S171].

If the vehicle 100 is currently driving, the network manager 1055 may determine whether it is currently raining [S172].

If it is currently raining, the network manager 1055 may determine that the current status of the vehicle is the first status, where it is necessary to secure a first bandwidth (for example, 75% or more) for transmitting emergency Ethernet signals [S173].

If it is not currently raining, the network manager 1055 may determine that the current status of the vehicle is the second status, where it is necessary to secure a second bandwidth (for example, less than 75% but at least 50%) for transmitting emergency Ethernet signals [S174].

On the other hand, even if the vehicle 100 is not currently driving, the network manager 1055 may determine whether it is currently raining [S 175].

If it is currently raining, the network manager 1055 may determine that the current status of the vehicle is the third status, where it is necessary to secure a third bandwidth (for example, less than 50% but at least 25%) for transmitting emergency Ethernet signals [S176].

If it is not currently raining, the network manager 1055 may determine that the current status of the vehicle is the fourth status, where it is necessary to secure a fourth bandwidth (for example, less than 25%) for transmitting emergency Ethernet signals [S177].

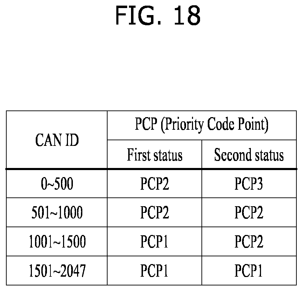

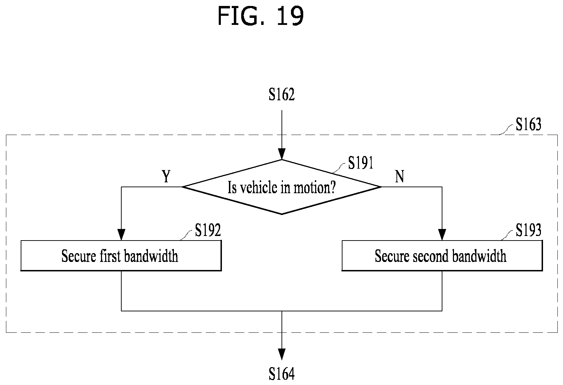

In the above, it has been explained that the PCP table is defined such that the vehicle status is divided into four statuses. However, this is merely an example, and the status of the vehicle may be divided into fewer or more statuses. Cases in which the vehicle status is divided into fewer statuses will be described with further reference to FIGS. 18 and 19. FIG. 18 illustrates an exemplary PCP table according to an embodiment of the present disclosure, and FIG. 19 is a flowchart illustrating determination of the current status of a vehicle according to an embodiment of the present disclosure.

As illustrated in FIG. 18, the current status of the vehicle 100 may be divided into two statuses: first and second statuses.

The first status is a status where it is deemed necessary to secure more than 50% of a bandwidth for transmitting emergency Ethernet signals, while the second status is a status where it is deemed sufficient to secure less than 50% of the bandwidth for transmitting emergency Ethernet signals.

In the first status, it is illustrated that there are no CAN signals mapped to the PCP3 priority, CAN signals with CAN IDs in first and second ranges are mapped to the PCP2 priority, and CAN signals with CAN IDs in third and fourth ranges are mapped to the PCP1 priority.

In the second status, it is illustrated that CAN signals with CAN IDs in the first range are mapped to the PCP3 priority, CAN signals with CAN IDs in the second and third ranges are mapped to the PCP2 priority, and CAN signals with CAN IDs in the fourth range are mapped to the PCP1 priority.

In the first status, since there are no CAN signals mapped to the PCP3 priority, only first emergency Ethernet signals exclusively occupy the first-class queue and may be transmitted the fastest. In the first status, it is illustrated that CAN signals in the first and second ranges are mapped to the PCP2 priority. Therefore, second emergency Ethernet signals may share the second-level queue with the Ethernet signals in the first and second ranges in the first status.

In the second status, since CAN signals in the first range are mapped to the PCP3 priority, Ethernet signals in the first range may share the first-class queue with the first emergency Ethernet signals. In the second status, it is illustrated that CAN signals in the second and third ranges are mapped to the PCP2 priority. Therefore, in the second status, the second emergency Ethernet signals may share the second-level queue with Ethernet signals in the second and third ranges.

Hereinafter, it will be described with further reference to FIG. 19 that the current status of the vehicle is determined based on the data for vehicle status determination and the PCP table in FIG. 18 by assuming that the data for vehicle status determination includes the driving status of the vehicle.

The network manager 1055 may determine whether the vehicle 100 is currently driving [S191].

If the vehicle 100 is currently driving, the network manager 1055 may determine that the current status of the vehicle is the first status, where it is necessary to secure a first bandwidth (e.g., 50% or more) for transmitting emergency Ethernet signals [S192].

If the vehicle 100 is not currently driving, the network manager 1055 may determine that the current status of the vehicle is the second status, where it is necessary to secure a second bandwidth (e.g., less than 50%) for transmitting emergency Ethernet signals [S193].

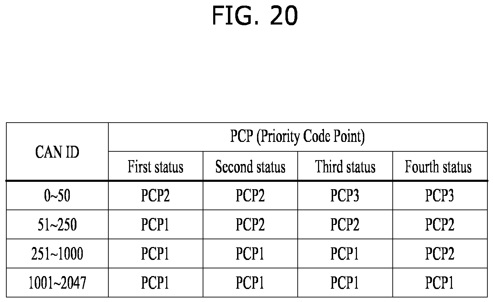

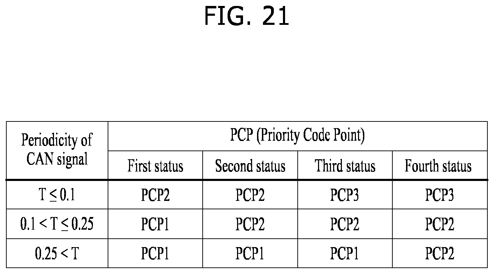

In the above, it is described that CAN IDs in the PCP table are divided into four ranges: first, second, third, and fourth ranges. Specifically, CAN IDs in the first range are 0 to 500, CAN IDs in the second range are 501 to 1000, CAN IDs in the third range are 1001 to 1500, and CAN IDs in the fourth range are 1501 to 2047. However, the PCP is not limited to thereto and may be defined according to various standards. Details thereof will be further explained with reference to FIGS. 20 and 21. FIGS. 20 and 21 illustrate exemplary PCP tables according to an embodiment of the present disclosure.

As shown in FIG. 20, the CAN IDs may be divided into the four ranges: first, second, third, and fourth ranges, in a relatively exponential scale. Specifically, the CAN IDs in the first range may be 0 to 50, the CAN IDs in the second range may be 51 to 250, the CAN IDs in the third range may be 251 to 1000, and the CAN IDs in the fourth range may be 1001 to 2047.

On the other hand, the CAN signals may not need to be distinguished solely by the CAN IDs. The CAN signals may also be distinguished based on the transmission periods thereof. This is based on that the shorter the transmission period of the CAN signal, the higher the importance of the CAN signal may be.

As shown in FIG. 21, the CAN signals may be divided into three ranges: first, second, and third ranges. Specifically, CAN signals in the first range have a signal transmission period of 0.1 seconds or less, CAN signals in the second range have a signal transmission period of more than 0.1 seconds but less than 0.25 seconds, and CAN signals in the third range have a signal transmission period of 0.25 seconds or more. The values of transmission periods are exemplary, and the present disclosure is not limited thereto.

The process for converting CAN signals to Ethernet signals based on such a PCP table has been previously explained, and thus detailed explanations will be omitted.

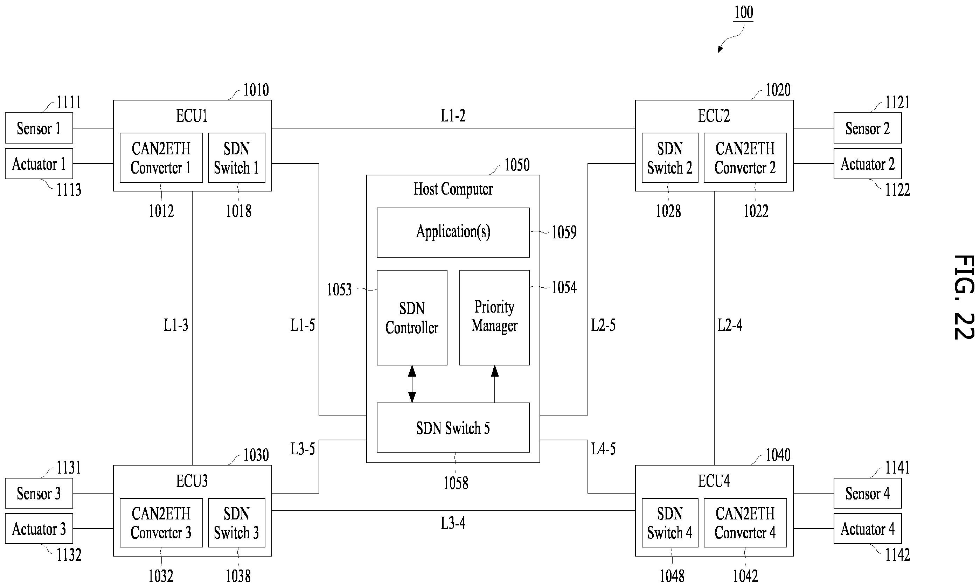

Hereinafter, a hybrid network system for applying both a legacy network system and a next-generation network system to the vehicle 100 for communication between multiple ECUs will be described with reference to FIG. 22. FIG. 22 is a block diagram of a hybrid network system for communication among a plurality of nodes in a vehicle according to the present disclosure.

Hereinafter, it is assumed that the legacy network system is a CAN system and the next-generation network system is an Ethernet network system. However, this is merely an example, and other network systems may also be considered as the legacy network system and the next-generation network system.

The vehicle 100 may include a plurality of ECUs. In FIG. 22, the vehicle 100 is illustrated as including four ECUs: ECU1 1010, ECU2 1020, ECU3 1030, and ECU4 1040. However, this is merely an example, and the vehicle 100 may include more ECUs.

Each ECU 1010, 1020, 1030, or 1040 may include a CAN2ETH converter 1012, 1022, 1032, or 1042 for converting CAN signals into Ethernet signals and a software-defined networking SDN switch 1018, 1028, 1038, or 1048 for communication based on SDN. CAN transceivers and Ethernet transceivers are omitted in each ECU.

Specifically, ECU1 1010 may include CAN2ETH converter 1 1012 and SDN switch 1 1018, ECU2 1020 may include CAN2ETH converter 2 1022 and SDN switch 2 1028, ECU3 1030 may include CAN2ETH converter 3 1032 and SDN switch 3 1038, and ECU4 1040 may include CAN2ETH converter 4 1042 and SDN switch 4 1048.

Each ECU 1010, 1020, 1030, or 1040 may control at least one sensor 1111, 1121, 1131, or 1141 and/or at least one actuator 1113, 1122, 1132, or 1142 (for example, the above-described driver).

In FIG. 22, it is illustrated that ECU1 1010 controls sensor 1 1111 and actuator 1 1113, ECU2 1020 controls sensor 2 1121 and actuator 2 1122, ECU3 1030 controls sensor 3 1131 and actuator 3 1132, and ECU4 1040 controls sensor 4 1141 and actuator 4 1142. This is merely an example, and each ECU may be configured to control more or fewer sensors and/or actuators.

Additionally, the vehicle may include a host computer 1050 to oversee the electrical/electronic control of the vehicle 100, similar to controlling the plurality of ECUs. The host computer 1050 may be a high-performance computer (HPC) or a general purpose computer. The host computer 1050 may include SDN switch 5 1058, an SDN controller 1053, a priority manager 1054, and an application 1059. The host computer 1050 may be the same entity as the ECU 1050 or may be a different entity.

Each ECU 1010, 1020, 1030, or 1040 and the host computer 1050 may be understood as nodes in the network system. Although FIG. 22 illustrates that the network system is configured with five nodes, the network system may certainly be configured with fewer or more nodes.

ECU1 1010 may be connected to ECU2 1020 through an L1-2 link, to ECU3 1030 through an L1-3 link, and to the host computer 1050 through an L1-5 link.

ECU2 1020 may be connected to ECU4 1040 through an L2-4 link and to the host computer 1050 through an L2-5 link.

ECU3 1030 may be connected to ECU4 1040 through an L3-4 link and to the host computer 1050 through an L3-5 link.

ECU4 1040 may be connected to the host computer 1050 through an L4-5 link.

The links in the network system are illustrative. Therefore, the network system may be configured without one of these links, or additional links (e.g., a link connecting ECU1 1010 to ECU4 1040 and/or a link connecting ECU2 1020 to ECU3 1030) may be further defined.

Hereinafter, the configuration of each ECU will be described in detail.

The operation of the CAN2ETH converters 1012, 1022, 1032, and 1042 and the SDN switches 1018, 1028, 1038, and 1048 within the ECUs 1010, 1020, 1030, and 1040 will be described by taking as an example ECU1 1010. The explanation for ECU1 1010 may, of course, be applied to the other ECUs as well.

CAN2ETH converter 1 1012 may receive signals sensed by sensor 1 1111, which is controlled by ECU1 1010, from sensor 1 1111. The signals sensed by sensor 1 1111 are CAN sensing signals based on the CAN system and may be transmitted to ECU1 1010.

CAN2ETH converter 11012 may convert the CAN sensing signals (or messages) into Ethernet sensing signals (or messages).

SDN switch 1 1018 is intended for ECU1 1010 to exchange Ethernet signals with other ECUs or host computers (i.e., other nodes). For example, Ethernet sensing signals may be transmitted to SDN switches of other nodes, and Ethernet signals may be received from other nodes. The destination internet protocol/media access control (IP/MAC) addresses of Ethernet signals may be predefined for SDN switch 1 1018 based on the types (and/or identifiers) of Ethernet signals. SDN switch 1 1018 may store a table that organizes information about transmission paths related to the types of each Ethernet signal (matching between source IP/MAC addresses and destination IP/MAC addresses or between IP/MAC addresses and output ports). Herein, such a table may be referred to as a "forwarding table."

As described above, Ethernet signals between an ECU and another ECU or between an ECU and a host computer may be communicated through an SDN switch. SDN is designed to separate the Ethernet network into a control plane and a data plane, collectively manage the control plane in software, and easily modify at least one of path patterns or bandwidths of an Ethernet signal transmission path in the data plane depending on the communication environment in the vehicle 100. Here, a change in the bandwidth may be understood as securing a bandwidth necessary for communication.

Hereinafter, each component of the host computer 1050 will be described.

SDN switch 5 1058 is intended for the host computer 1050 to communicate Ethernet signals with other ECUs. The transmission paths for Ethernet signals are predefined for SDN switch 5 1058 based on the types of the Ethernet signals. SDN switch 5 1058 may also store a forwarding table including organized transmission paths related to the types of each Ethernet signal, similarly to SDN switch 1 1018.

The SDN controller 1053 is responsible for the control plane in the vehicle 100. The SDN controller 1053 may change the transmission paths (i.e., at least one of path patterns or bandwidths of the transmission paths) of Ethernet signals in the data plane, depending on the communication environment in the vehicle 100.

The priority manager 1054 monitors signals (or messages) for multicast service communications within the vehicle 100 and forwards signals satisfying a predetermined priority level among the monitored signals to the SDN controller 1053, thereby enabling the SDN controller 1053 to secure or modify the transmission paths for Ethernet signals related to service communications corresponding to the signals satisfying the predetermined priority level.

The application 1059 may be an application for supporting the operations and/or computations of the SDN controller 1053 and the priority manager 1054. The SDN controller 1053 and the priority manager 1054 may use the application 1059 for the operations and/or computations thereof.

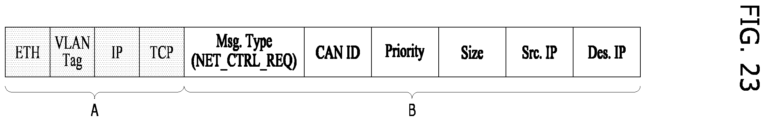

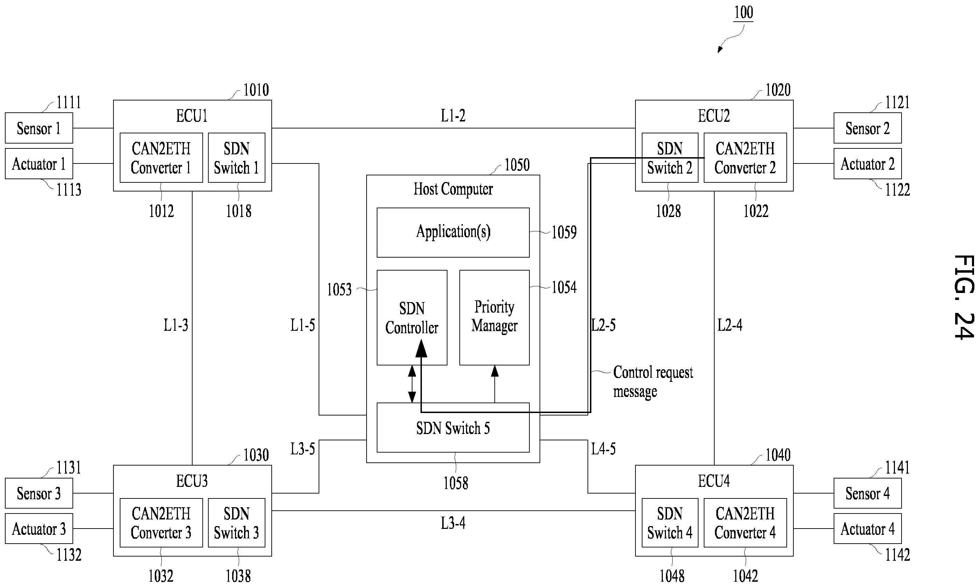

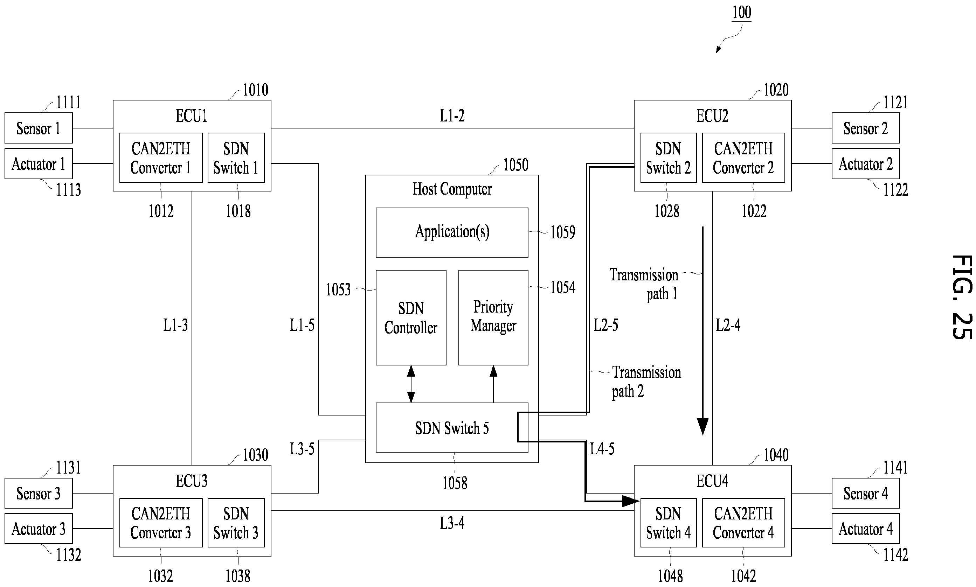

Hereinafter, modification of the transmission paths for Ethernet signals in the network system of FIG. 22 will be described with reference to FIGS. 23 to 25. FIG. 23 illustrates the packet structure of a control request message for securing the transmission path for an Ethernet signal according to an embodiment of the disclosure, and FIGS. 24 and 25 illustrate examples in which the transmission path for an Ethernet signal is changed according to the control request message of FIG. 23.

When ECU2 1020 receives a CAN sensing signal, for example, from sensor 2 1121, the CAN2ETH converter 2 1022 in ECU2 1020 may convert the CAN sensing signal into an Ethernet sensing signal and transmit the Ethernet sensing signal to SDN switch 2 1028 of ECU2 1022. SDN switch 2 1028 may refer to the forwarding table thereof (hereafter referred to as "forwarding table 2") and then transmit the converted Ethernet sensing signal to another node within the network system. It is assumed that the other node receiving the Ethernet sensing signal is ECU4 1040. In addition, it is assumed that the transmission path for the Ethernet sensing signal predefined in forwarding table 2 is the L2-4 link (i.e., the transmission path is the L2-4 link).

However, when ECU2 1020 transmits the Ethernet sensing signal to ECU4 1040 via the L2-4 link, the latency of the Ethernet sensing signal may occur depending on the current data traffic status on the L2-4 link. In addition, if there is a physical issue with the L2-4 link, ECU4 1040 may not receive the Ethernet sensing signal.

To prevent such situations, before transmitting the Ethernet sensing signal to ECU4 1040, ECU2 1020 may transmit a control request message to the host computer 1050 to secure the transmission path for the Ethernet sensing signal.

As illustrated in FIG. 23, the control request message may be composed of an Ethernet packet part A and a payload packet part B.

The Ethernet packet part A is designed to comply with the standards for transmission control protocol/Internet protocol based (TCP/IP-based) communication between nodes and may include an Ethernet packet header (ETH), a virtual local area network (VLAN) tag header for network virtualization, an IP header, and a TCP header.

The payload packet part B may include a message type (Msg. Type) indicating the type of the CAN sensing signal (or Ethernet sensing signal), the ID of the CAN sensing signal (or the Ethernet signal) (CAN ID), the priority of the CAN sensing signal (or Ethernet sensing signal), the data size of the CAN sensing signal (or Ethernet sensing signal), information on the source IP of the Ethernet sensing signal (Src. IP) (i.e., source identifier), and information on the destination IP of the Ethernet sensing signal (Des. IP) (i.e., destination identifier). In FIG. 23, the message type is exemplified as a network control request (NET_CTRL_REQ).

As illustrated in FIG. 24, the control request message may be transmitted to the SDN controller 1053 of the host computer 1050 via the L2-5 link.

The control request message may be generated and transmitted only if the priority of the Ethernet sensing signal is above a predetermined level. Alternatively, the control request message may be generated and transmitted regardless of the priority.

The SDN controller 1053 may recognize the priority of the Ethernet sensing signal that ECU2 1020 intends to transmit, based on the control request message.

If the recognized priority is above the predetermined level, the SDN controller 1053 may determine that the scheduled transmission path for the Ethernet sensing signal is the L2-4 link (transmission path 1) based on information in the control request message as shown in FIG. 25. That is, the SDN controller 1053 may recognize that the path pattern of the scheduled transmission path is configured with the L2-4 link. The SDN controller 1053 may also determine the data size of the Ethernet sensing signal from the control request message.

Then, the SDN controller 1053 may check whether a bandwidth required to transmit the Ethernet sensing signal is available on the L2-4 link. The required bandwidth may vary depending on the data size of the Ethernet sensing signal. For example, the required bandwidth may be proportional to the data size of the Ethernet sensing signal.

The bandwidths required for Ethernet sensing signals of the same data size may be the same regardless of priorities or vary depending on the priorities. If the required bandwidth varies depending on the priorities, the bandwidth may be wider for higher priorities and narrower for lower priorities. Alternatively, if the required bandwidth varies depending on the priorities, the bandwidth may be narrower for higher priorities and wider for lower priorities.

If it is confirmed that the required bandwidth is available, the SDN controller 1053 may maintain the scheduled transmission path (transmission path 1), i.e., the L2-4 link as it is. That is, the pattern of the transmission path configured with the L2-4 link may be maintained. In addition, the SDN controller 1053 may secure the bandwidth required for transmitting the Ethernet sensing signal on the L2-4 link.

Therefore, the Ethernet sensing signal may be transmitted along the scheduled transmission path.

If it is confirmed that the required bandwidth is not available, the SDN controller 1053 may maintain the scheduled transmission path (transmission path 1). The SDN controller 1053 may block other communication traffic having lower priorities than the Ethernet sensing signal to secure the bandwidth required for transmitting the Ethernet sensing signal.

Therefore, the Ethernet sensing signal may be transmitted along the scheduled transmission path.

Both a case where the required bandwidth is initially available and secured and a case where the required bandwidth is not initially available but becomes available by blocking other communication traffic may be understood as cases where the bandwidth is secured.

However, if there is no other communication traffic with lower priorities than the Ethernet sensing signal, the SDN controller 1053 may not secure the bandwidth required for transmitting the Ethernet sensing signal on the scheduled transmission path (transmission path 1).

Alternatively, a physical issue may occur on the scheduled transmission path, which may cause the scheduled transmission path to be blocked and make Ethernet communication on the scheduled transmission path entirely impossible. This case may also be understood as a case where it is not possible to secure the bandwidth required for transmitting the Ethernet sensing signal.

As shown in FIG. 25, in this case, the SDN controller 1053 may change the scheduled transmission path (i.e., the path pattern of the transmission path) (transmission path 1) to an alternative transmission path (transmission path 2) capable of securing the bandwidth for transmitting the Ethernet sensing signal. In FIG. 9, the alternative transmission path (transmission path 2) (i.e., the path pattern) is illustrated as being configured with the L2-5 link and L4-5 link. This is merely an example of the alternative transmission path and may be configured differently. For example, the alternative transmission path may be configured with the L1-2 link, L1-3 link, and L3-4 link.

When the path pattern of the transmission path is changed from transmission path 1 to transmission path 2, the SDN controller 1053 may control SDN switch 2 1028 and SDN switch 5 1058 to modify forwarding table 2 of SDN switch 2 1028 and forwarding table 5 of SDN switch 5 1058, which are related to the transmission of the Ethernet sensing signal along transmission path 2.

In other words, forwarding table 2 may be modified such that when SDN switch 2 1028 receives the Ethernet sensing signal from CAN2ETH converter 2 1022, the Ethernet sensing signal is forwarded to SDN switch 5 1058.

Forwarding table 5 may be modified such that when SDN switch 5 1058 receives the Ethernet sensing signal from SDN switch 2 1028, the Ethernet sensing signal is forwarded to SDN switch 4 1048.

Therefore, the Ethernet sensing signal may be transmitted on the alternative transmission path.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include a controller of an autonomous driving system. The foregoing embodiments are merely exemplary and are not to be considered as limiting the present disclosure. The present teachings can be readily applied to other types of methods and apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

## Claims

1. A method of controlling an in-vehicle network, the method comprising:
receiving, by a first node in a vehicle, a first controller area network (CAN) signal from a first sensor of the first node through CAN communication;
converting, by the first node, the first CAN signal into a first Ethernet signal with priority information varying depending on a vehicle status; and
transmitting, by the first node, the converted first Ethernet signal to a second node in the vehicle through Ethernet communication.

2. The method of claim 1, wherein the priority information includes a priority code point (PCP) value.

3. The method of claim 2, wherein the first node stores a PCP table having PCP values respectively corresponding to:
a first vehicle status and a first CAN identifier (ID) range;
the first vehicle status and a second CAN ID range;
a second vehicle status and the first CAN ID range; and
the second vehicle status and the second CAN ID range.

4. The method of claim 3, further comprising receiving, by the first node, the vehicle status from a network manager of a third node in the vehicle.

5. The method of claim 3, further comprising:
receiving, by the network manager, data for vehicle status determination from at least one node in the vehicle; and
determining, by the network manager, the vehicle status based on the data for vehicle status determination.

6. The method of claim 5, wherein the data for vehicle status determination includes information on at least one of driving speed, weather, time, or driving road conditions.

7. The method of claim 5, further comprising transmitting, by the network manager, the determined vehicle status to all nodes in the vehicle.

8. The method of claim 4, comprising:
retrieving, by the first node, a PCP value for the first CAN signal from the PCP table based on whether the received vehicle status corresponds to the first vehicle status or the second vehicle status and based on whether a CAN ID of the first CAN signal belongs to the first CAN ID range or the second CAN ID range; and
converting, by the first node, the first CAN signal into the first Ethernet signal with the retrieved PCP value.

9. The method of claim 2, wherein the first node stores a PCP table having PCP values respectively corresponding to:
a first vehicle status and a first CAN signal transmission period range;
the first vehicle status and a second CAN signal transmission period range;
a second vehicle status and the first CAN signal transmission period range; and
the second vehicle status and the second CAN signal transmission period range.

10. The method of claim 9, comprising:
retrieving, by the first node, a PCP value for the first CAN signal from the PCP table based on whether the received vehicle status corresponds to the first vehicle status or the second vehicle status and based on whether a transmission period of the first CAN signal belongs to the first CAN signal transmission period range or the second CAN signal transmission period range; and
converting, by the first node, the first CAN signal into the first Ethernet signal with the retrieved PCP value.

11. The method of claim 3, wherein the first node is configured to:
transmit the first Ethernet signal with a first PCP value to the second node through a first-class queue; and
transmit the first Ethernet signal with a second PCP value to the second node through a second-class queue.

12. The method of claim 11, wherein a transmission bandwidth of the first-class queue is wider than a transmission bandwidth of the second-class queue.

13. The method of claim 11, comprising transmitting, by a fourth node, an emergency Ethernet signal to other nodes through the first-class queue.

14. The method of claim 13, wherein the fourth node comprises a second sensor based on Ethernet configured to sense data necessary for safe operation of the vehicle, and
wherein the second sensor is configured to generate the data necessary for the safe operation of the vehicle as the emergency Ethernet signal.

15. The method of claim 13, wherein the emergency Ethernet signal comprises a first emergency Ethernet signal and a second emergency Ethernet signal, and
wherein the fourth node is configured to:
transmit the first emergency Ethernet signal to the other nodes through the first-class queue; and
transmit the second emergency Ethernet signal to the other nodes through the second-class queue.

16. The method of claim 15, wherein each of the first to fourth node is an electronic control unit (ECU) in the vehicle.

17. The method of claim 3, wherein the first node comprises:
a CAN transceiver configured to transmit and receive the first CAN signal to and from the first sensor;
a controller area network to Ethernet (CAN2ETH) converter configured to convert the first CAN signal to the first Ethernet signal;
an Ethernet transceiver configured to transmit the first Ethernet signal to the second node; and
a PCP database (DB) storing the PCP table.

18. The method of claim 17, wherein the Ethernet transceiver is configured to receive the determined vehicle status from a network manager as an Ethernet signal.

19. The method of claim 1, further comprising:
determining whether a bandwidth required for transmission of the first Ethernet signal is capable of being secured on a transmission path between the first node and the second node based on the priority information on the first Ethernet signal;
based on that the bandwidth is capable of being secured, controlling the first Ethernet signal to be transmitted to the second node along the transmission path; and
based on that the bandwidth is incapable of being secured, changing the transmission path to route through a third node and controlling the first Ethernet signal to be transmitted to the second node along the changed transmission path.

20. An in-vehicle network comprising:
a first node; and
a second node,
wherein the first node is configured to:
receive a first controller area network (CAN) signal from a first sensor of the first node through CAN communication;
convert the first CAN signal into a first Ethernet signal with priority information varying depending on a vehicle status; and
transmit the converted first Ethernet signal to the second node through Ethernet communication.
